# EUROPÄISCHE PATENTSCHRIFT

(11) **EP 3 824 528 B1**
(45) Veröffentlichungstag und Bekanntmachung des Hinweises auf die Patenterteilung: **14.01.2026**
(21) Anmeldenummer: 19737661.9
(22) Anmeldetag: 04.07.2019
(51) Int. Cl.: H02K 3/52, H02K 3/28, H02K 15/32

(54) **ELEKTROMOTOR MIT EINER VERSCHALTUNGSEINHEIT UND VERFAHREN ZUR HERSTELLUNG EINES ELEKTROMOTORS MIT EINER VERSCHALTUNGSEINHEIT**
ELECTRIC MOTOR COMPRISING A WIRING UNIT AND METHOD FOR PRODUCING AN ELECTRIC MOTOR WITH COMPRISING A WIRING UNIT
MOTEUR ÉLECTRIQUE COMPRENANT UNE UNITÉ DE CÂBLAGE ET PROCÉDÉ DE RÉALISATION D'UN MOTEUR ÉLECTRIQUE COMPRENANT UNE UNITÉ DE CÂBLAGE

(30) Priorität: 19.07.2018 DE 102018005671
(43) Veröffentlichungstag der Anmeldung: 26.05.2021
(73) Patentinhaber: SEW-EURODRIVE GmbH & Co. KG, 76646 Bruchsal (DE)
(72) Erfinder: HEER, Markus, 79689 Maulburg (DE); HETTEL, Domenik, 76474 Au am Rhein (DE)
(86) Internationale Anmeldenummer: PCT/EP2019/025213
(87) Internationale Veröffentlichungsnummer: WO 2020/015855

(56) Entgegenhaltungen:
- WO-A1-2017/078455
- JP-A- 2009 290 922
- US-A1- 2005 189 833
- US-A1- 2008 136 274
- US-A1- 2013 200 743

## Beschreibung

Die Erfindung betrifft einen Elektromotor mit einer Verschaltungseinheit und ein Verfahren zu dessen Herstellung.

Es ist allgemein bekannt, dass ein Elektromotor einen Stator aufweist, an welchem eine mehrphasige Wicklung angeordnet ist. Die Wicklung besteht dabei beispielsweise aus mehreren miteinander verschalteten Spulen. Es sind darüber hinaus Statoren bekannt, welche aus bewickelten Einzelzähnen aufgebaut sind, bei denen also jeder Statorzahn eine Einzelzahnwicklung aufnimmt. Dabei bildet jede Einzelzahnwicklung eine Spule, welche aus Wicklungsdraht hergestellt ist. Die freien Enden eines Wicklungsdrahtes bilden die beiden Spulenanschlüsse einer Spule, welche für gewöhnlich an einem oder beiden axialen Enden des Stators miteinander verschaltet werden müssen, um die mehrphasige Wicklung zu bilden. Es sind dabei Sternschaltung und Dreieckschaltung bekannt.

Die vorliegende Erfindung eignet sich insbesondere für Synchronmotoren, dessen Statoren aus einzelnen Statorzahnsegmenten aufgebaut sind, wobei jedes Statorzahnsegment jeweils eine Spule, also Einzelzahnwicklung, aufweist. Diese Synchronmotoren weisen insbesondere eine dreiphasige Wicklung mit den Phasen U, V und W auf, wobei jeder Phase bevorzugt eine Spulengruppe zugeordnet ist. Eine Spulengruppe wiederum umfasst mehrere einzelne Spulen, wobei diese Spulen mittels der erfindungsgemäßen Verschaltungseinheit elektrisch miteinander verbunden sind. Ein Spulenanschluss einer Spule ist also mit einem anderen Spulenanschluss einer anderen Spule mittels eines Verschaltungselementes der Verschaltungseinheit kontaktiert. Die so verbundenen Spulengruppen sind bevorzugt in Sternschaltung miteinander verschaltet.

Aus dem Stand der Technik sind verschiedene Arten der Verschaltung von Spulenanschlüssen bekannt.

Aus der DE 11 2013 005 061 T5 ist eine Statoreinheit und ein Motor bekannt, wobei eine Sammelschieneneinheit auf einer Oberseite des Stators angeordnet ist.

Aus der DE 10 2012 024 581 A1 ist ein Elektromotor mit einem Verschaltungsring bekannt, bei welchem Drahtabschnitte in konzentrisch verlaufende, radial beabstandete Nuten eingelegt werden.

Aus der DE 10 2012 020 329 A1 ist ein Elektromotor mit einem Verschaltungsring bekannt, bei welchem, insbesondere als Stanz-Biege-Teile ausgeführte, elektrische Leitungen in konzentrisch verlaufenden, radial beabstandeten Nuten eingelegt werden.

Aus der DE 103 28 720 A1 ist eine elektrische Maschine mit einem ringförmigen Träger und mit im Träger angeordneten Leiterbahnen zur elektrischen Verbindung von Spulen und Wicklungssträngen bekannt. Die Leiterbahnen sind dabei hochkant radial hintereinander gestaffelt und in Umfangsrichtung zueinander versetzt in den Träger eingesetzt.

Aus der DE 10 2014 201 637 A1 ist ein Elektromotor mit einem Trägerbauteil bekannt, bei welchem die Verschaltung der Wicklungsenden mittels mehrteiliger Stromschienen erfolgt.

Aus der EP 2 752 973 A1 ist ein Elektromotor mit einem Verschaltungsring bekannt, bei welchem kreisbogenförmige Stromschienen in zwei Ringnuten des Verschaltungsrings eingesetzt werden.

Aus der DE 10 2016 204 935 A1 ist eine elektrische Maschine mit einer Verschaltungsplatte bekannt, bei welcher Leiterelemente zur Verschaltung der Wicklungen verwendet werden, wobei die Leiterelemente zur Isolierung kunststoffumspritzt sind.

Aus der DE 10 2015 200 093 A1 ist eine Verschaltungsplatte eines Stators einer elektrischen Maschine bekannt, wobei die Verschaltungsplatte Leiterelemente aufweist, welche mit der elektrischen Wicklung verbindbar sind.

Aus der WO 2017 078 455 A1 ist eine Verschaltungseinheit, ein Motor und ein Leistungsübertragungssystem bekannt.

Aus der US 2008 136 274 A1 ist ein Motor, Stator, Draht und ein Herstellungsverfahren desselben bekannt.

Aus der US 2013 200 743 A1 ist ein Stator für eine elektrische Drehmaschine bekannt.

Aus der US 2005 189 833 A1 ist eine Statorwickelstruktur eines Motors oder Generators bekannt.

Der Erfindung liegt daher die Aufgabe zugrunde, einen Elektromotor mit einer Verschaltungseinheit und ein Verfahren zu dessen Herstellung weiterzubilden, wobei der Fertigungsaufwand bei der Herstellung verringert ist und der Elektromotor einfacher, kostengünstiger und stabiler herstellbar ist.

Erfindungsgemäß wird die Aufgabe bei der nach den in Anspruch 1 und bei dem Verfahren nach den in Anspruch 13 angegebenen Merkmalen gelöst.

Wichtige Merkmale der Erfindung bei dem Elektromotor, insbesondere permanenterregten Synchronmotor, mit einem um eine Drehachse drehbar angeordneten Rotor und mit einem Stator sind, dass der Stator mehrere Spulen aufweist, wobei jede Spule zwei Spulenanschlüsse aufweist, insbesondere wobei der Stator mehrere Statorsegmente und jedes Statorsegment genau eine Spule aufweist, wobei die Spulen mittels einer Verschaltungseinheit, insbesondere in Sternschaltung, miteinander verschaltet sind, wobei die Verschaltungseinheit ein Trägerteil, insbesondere ein im Wesentlichen ringförmiges Trägerteil, insbesondere ein Trägerteil aus einem Isoliermaterial, zur Aufnahme von mehreren, insbesondere mindestens vier, voneinander beabstandeten Verschaltungselementen umfasst, insbesondere wobei die Verschaltungseinheit an einem axialen Ende des Stators, insbesondere konzentrisch zur Drehachse, angeordnet ist, wobei mindestens drei erste Verschaltungselemente vorgesehen sind, wobei jedes der ersten Verschaltungselemente jeweils zwei, insbesondere genau zwei, voneinander beabstandete Kontaktierungsbereiche und einen mit den Kontaktierungsbereichen verbundenen Verbindungsbereich aufweist, insbesondere so dass der Verbindungsbereich zwischen den Kontaktierungsbereichen angeordnet ist, wobei die, insbesondere alle, Kontaktierungsbereiche jedes ersten Verschaltungselements jeweils mit einem der Spulenanschlüsse an jeweils einer Verbindungsstelle elektrisch verbunden sind, insbesondere mittels Laserschweißen stoffschlüssig verbunden, wobei der von dem Verbindungsbereich eines der ersten Verschaltungselemente in Umfangs- und Radialrichtung überdeckte Bereich jeweils einen von dem Verbindungsbereich eines anderen der ersten Verschaltungselemente in Umfangs- und Radialrichtung überdeckten Bereich überlappt.

Die Ausdrücke "Umfangsrichtung", "Radialrichtung" und "Axialrichtung" beziehen sich auf Richtungen relativ zur Drehachse des Rotors. Axialrichtung bezeichnet also die Richtung parallel zur Drehachse, während Radialrichtung die Richtungen senkrecht zur Drehachse und von der Drehachse radial nach außen beziehungsweise auf die Drehachse radial nach innen bezeichnet. Umfangsrichtung ist als diejenige Richtung zu verstehen, welche entlang des Umfangs einer senkrecht und insbesondere konzentrisch zur Drehachse verlaufenden geschlossenen Kurve, insbesondere eines Kreises, verläuft. Der Begriff ist also nicht auf kreisförmige Umfänge beschränkt, sondern auch für beispielsweise elliptische oder polygonale Umfänge verwendbar.

Der Ausdruck "im Wesentlichen ringförmiges Trägerteil" ist so zu verstehen, dass das Trägerteil scheibenförmig ausgebildet ist, also eine durchgehende Öffnung in der Mitte aufweist und die Ausdehnung in Axialrichtung geringer ist als der Durchmesser des Trägerteils in der Ebene senkrecht zur Drehachse. Der exakte Verlauf der Außen- und Innenkontur ist dabei nicht notwendigerweise wie bei einem Ring kreisförmig. Es sind auch andere Formen denkbar wie beispielsweise polygonale Formen. Auch ist es möglich, dass die Form von der idealen Kreisform abweicht, indem zum Beispiel am Außenumfang oder am Innenumfang Ausnehmungen vorhanden sind.

Als Isoliermaterial für das Trägerteil wird vorzugsweise Kunststoff verwendet. Insbesondere wird das Trägerteil mittels eines Kunststoffspritzgussverfahrens hergestellt. Es sind aber auch andere Materialien verwendbar, welche elektrische Isolationseigenschaften besitzen, also Isoliermaterialien sind.

Das Trägerteil nimmt die Verschaltungselemente auf, es sorgt also für die räumliche Anordnung der Verschaltungselemente zueinander. Die Verschaltungselemente sind zueinander beabstandet, sie berühren sich also nicht und stehen also nicht in direktem Kontakt miteinander.

Statt Laserschweißen sind auch Hartlöten, Ultraschallschweißen oder Widerstandsschweißen ausführbar.

Die Verschaltungselemente sind aus einem elektrisch leitfähigen Material gefertigt, vorzugsweise aus Metall oder Metallblech und insbesondere aus Kupferblech. Die Verschaltungselemente sind vorzugsweise einstückig und/oder vorzugsweise als Stanz-Biege-Teile ausgeführt. Die Herstellung ist mittels Wasserstrahlschneiden oder Laserschneiden ausführbar.

Unter "Verbindungsstelle" wird derjenige Ort verstanden, an welchem eine elektrische Verbindung zwischen einem Verschaltungselement und einem Spulenanschluss vorhanden ist.

Unter "Bereich" ist ein bestimmter Teil eines Bauteils zu verstehen, welcher eine bestimmte Funktion erfüllt. Beispielsweise verbindet der Verbindungsbereich des ersten Verschaltungselementes die beiden Kontaktierungsbereiche. Die Kontaktierungsbereiche wiederum dienen zur Kontaktierung der Verschaltungselemente mit den Spulenanschlüssen. Wenn ein Bauteil einstückig ausgeführt ist, ist eine exakte Abgrenzung zwischen den Bereichen nicht immer genau definierbar. Der Bereich eines Bauteils ist nicht zu verwechseln mit einem in einer Richtung "überdeckten Bereich" eines Bauteils.

Jedes auf dem Trägerteil aufgenommene erste Verschaltungselement ist in Axialrichtung über oder unter zumindest einem anderen ersten Verschaltungselement angeordnet. Die ersten Verschaltungselemente sind also in axialer Richtung teilweise übereinandergestapelt, ohne sich jedoch gegenseitig zu berühren. Der in Umfangs- und Radialrichtung überdeckte Bereich eines Verbindungsbereichs ist dabei diejenige Fläche, welche durch eine Projektion des entsprechenden Verbindungsbereichs parallel zur Axialrichtung auf eine zur Drehachse senkrechte Projektionsebene entsteht. Die so entstandenen Projektionsflächen der Verbindungsbereiche von jeweils zwei ersten Verschaltungselementen überlappen also in der Projektionsebene.

Von Vorteil ist dabei, dass eine kompakte Bauform der Verschaltungseinheit erreichbar ist.

Erfindungsgemäß sind die ersten Verschaltungselemente baugleich ausgeführt.

Von Vorteil ist dabei, dass weniger verschiedenartige Verschaltungselemente hergestellt werden müssen und so der Fertigungsaufwand reduziert ist. Die Verschaltungseinheit ist mit einer Sorte von ersten Verschaltungselementen fertigbar. Dies erleichtert insbesondere die automatisierte Herstellung der ersten Verschaltungselemente, beispielsweise, wenn diese als Stanz-Biege-Teile maschinell gefertigt werden.

Bei einer vorteilhaften Ausgestaltung sind die von den Verbindungsbereichen der ersten Verschaltungselemente in Axialrichtung überdeckten Bereiche gleich.

Von Vorteil ist dabei, dass Bauraum in Axialrichtung einsparbar ist, so dass eine kompakte Bauform der Verschaltungseinheit in Axialrichtung erreichbar ist.

Bei einer vorteilhaften Ausgestaltung sind die von den Verbindungsbereichen der ersten Verschaltungselemente in Radialrichtung überdeckten Bereiche gleich.

Von Vorteil ist dabei, dass Bauraum in Radialrichtung einsparbar ist, so dass eine kompakte Bauform der Verschaltungseinheit in Radialrichtung erreichbar ist.

Bei einer vorteilhaften Ausgestaltung sind die Kontaktierungsbereiche jedes ersten Verschaltungselements derart geformt, dass die jeweiligen Verbindungsstellen jeweils im Wesentlichen dieselbe radiale Position, insbesondere am äußeren Umfang des Trägerteils, und/oder jeweils dieselbe axiale Position aufweisen.

Von Vorteil ist dabei, dass die Kontaktierung der Kontaktierungsbereiche mit den Spulenanschlüssen einfach ausführbar ist. Dadurch ist eine automatisierte Montage möglich. Vorteilhafterweise sind die Verbindungsstellen am äußeren Umfang des Trägerteils angeordnet, so dass eine leichte Zugänglichkeit vorhanden ist.

Bei einer vorteilhaften Ausgestaltung weist der Verbindungsbereich jedes der ersten Verschaltungselemente einen, insbesondere näherungsweise rechteckigen, Querschnitt auf, dessen Ausdehnung in Axialrichtung geringer ist als dessen Ausdehnung in Radialrichtung. Von Vorteil ist dabei, dass Bauraum in Axialrichtung einsparbar ist.

Bei einer vorteilhaften Ausgestaltung weist mindestens ein Verbindungsbereich eines der ersten Verschaltungselemente zwei axiale Stufen auf, insbesondere wobei alle Verbindungsbereiche der ersten Verschaltungselemente jeweils zwei axiale Stufen aufweisen. Von Vorteil ist dabei, dass ein teilweises Aufeinanderstapeln der ersten Verschaltungselemente vereinfacht ist. Statt diskreten Stufen im Verbindungsbereich ist auch eine in Axialrichtung, insbesondere konstant, verlaufende Neigung des Verbindungsbereiches möglich, so dass die beiden Kontaktierungsbereiche unterschiedliche axiale Positionen aufweisen und ein teilweises Aufeinanderstapeln ermöglicht ist.

Bei einer vorteilhaften Ausgestaltung weist jedes der ersten Verschaltungselemente jeweils einen ersten Befestigungsbereich zur formschlüssigen und/oder stoffschlüssigen Verbindung mit dem Trägerteil auf, insbesondere wobei jeder der ersten Befestigungsbereiche jeweils eine erste in Axialrichtung durchgehende Ausnehmung aufweist und das Trägerteil mehrere sich in Axialrichtung erstreckende Nietstifte aufweist, insbesondere wobei durch jede der ersten Ausnehmungen jeweils ein erster Nietstift hindurchführbar ist, insbesondere wobei die freien Enden der ersten Nietstifte, insbesondere mittels Ultraschallschweißen, zu Nietköpfen umgeformt sind.

Von Vorteil ist dabei, dass eine sichere und stabile, insbesondere unlösbare, Verbindung der Verschaltungselemente mit dem Trägerteil erreichbar ist, so dass eine Verliersicherung vorhanden ist. Alternativ zu Ultraschallschweißen ist auch Heißverstemmen oder Warmprägen ausführbar.

Die Ausnehmung ist beispielsweise als insbesondere zylinderförmiges Loch ausführbar. Ein Loch ist ein Beispiel für eine geschlossene Ausnehmung. Es sind jedoch auch offene Ausnehmungen denkbar, welche in der Ebene senkrecht zur Drehachse keine geschlossene Kurve bilden. Beispielsweise stellt eine Einkerbung in axialer Richtung ebenfalls eine Ausnehmung dar. Wesentlich ist lediglich, dass die Ausnehmung in Axialrichtung durchgehend verläuft und dazu geeignet ist, zu einer formschlüssigen und/oder stoffschlüssigen Verbindung mit dem Trägerteil beizutragen.

Unter einem Nietstift ist ein Fortsatz in axialer Richtung zu verstehen, der derart geformt ist, dass der in axialer Richtung durch die Ausnehmungen der ersten Verschaltungselemente hindurchführbar ist. Im beispielhaften Fall eines zylinderförmigen Loches als Ausnehmung ist der Nietstift als zylinderförmiger Fortsatz in Axialrichtung ausgeführt. Durch ein Umformen des freien Endes des Nietstiftes zu einem Nietkopf wird die formschlüssige und/oder stoffschlüssige Verbindung hergestellt. Um einen Formschluss zu erreichen, sind beispielsweise pilzförmige Nietköpfe oder scheibenförmige Nietköpfe geeignet. Der Durchmesser des Nietkopfs in der Ebene senkrecht zur Drehachse ist größer gewählt als der Durchmesser der entsprechenden Ausnehmung in der gleichen Ebene.

Bei einer vorteilhaften Ausgestaltung weist jedes der ersten Verschaltungselemente jeweils einen zweiten Befestigungsbereich zur formschlüssigen und/oder stoffschlüssigen Verbindung mit dem Trägerteil auf, insbesondere wobei jeder der zweiten Befestigungsbereiche jeweils eine zweite in Axialrichtung durchgehende Ausnehmung aufweist, wobei durch jede der zweiten Ausnehmungen jeweils ein zweiter Nietstift hindurchführbar ist, wobei die freien Enden der zweiten Nietstifte, insbesondere mittels Ultraschallschweißen, zu Nietköpfen umgeformt sind. Von Vorteil ist dabei, dass eine bessere und stabilere räumliche Fixierung der ersten Verschaltungselemente auf dem Trägerteil erreichbar ist, so dass ein Bewegen der Verschaltungselemente relativ zum Trägerteil verhindert ist.

Bei einer vorteilhaften Ausgestaltung weisen die ersten Befestigungsbereiche jedes der ersten Verschaltungselemente jeweils dieselbe erste radiale Position und/oder jeweils dieselbe erste axiale Position auf und/oder die zweiten Befestigungsbereiche jedes der ersten Verschaltungselemente weisen jeweils dieselbe zweite radiale Position und/oder jeweils dieselbe zweite axiale Position auf, insbesondere wobei die erste radiale Position und die zweite radiale Position verschieden sind, insbesondere wobei die erste axiale Position und die zweite axiale Position verschieden sind.

Von Vorteil ist dabei, dass die räumliche Fixierung der ersten Verschaltungselemente auf dem Trägerteil weiter verbessert ist. Ein Verkippen der Verschaltungselemente relativ zum Trägerteil ist verhindert.

Bei einer vorteilhaften Ausgestaltung überlappt der von einem der ersten Verschaltungselemente in Umfangs- und Radialrichtung überdeckte Bereich jeweils zwei von jeweils zwei anderen ersten Verschaltungselementen in Umfangs- und Radialrichtung überdeckte Bereiche.

Von Vorteil ist dabei, dass eine kompaktere Bauform der Verschaltungseinheit erreichbar ist. Die Formulierung ist so zu verstehen, dass in bestimmten Umfangs- und Radialbereichen drei erste Verschaltungselemente axial übereinander angeordnet sind.

Bei einer vorteilhaften Ausgestaltung ist ein zweites Verschaltungselement vorgesehen, welches drei, insbesondere genau drei, Kontaktierungsbereiche aufweist, wobei jeder der drei Kontaktierungsbereiche des zweiten Verschaltungselementes jeweils mit einem der Spulenanschlüsse verbunden ist, insbesondere elektrisch verbunden, insbesondere mittels Laserschweißen stoffschlüssig verbunden.

Von Vorteil ist dabei, dass eine Verschaltung der Spulen in Sternpunktschaltung ermöglicht ist. Das zweite Verschaltungselement dient dabei als Sternpunktelement zur Verbindung von drei verschiedenen Spulenanschlüssen. Für eine Verschaltung in Dreiecksschaltung ist das zweite Verschaltungselement verzichtbar.

Bei einer vorteilhaften Ausgestaltung weist das zweite Verschaltungselement zwei, insbesondere genau zwei, Befestigungsbereiche zur formschlüssigen und/oder stoffschlüssigen Verbindung mit dem Trägerteil auf, insbesondere wobei jeder Befestigungsbereich jeweils eine in Axialrichtung durchgehende Ausnehmung aufweist und wobei durch jede der Ausnehmungen jeweils ein dritter Nietstift hindurchführbar ist, insbesondere wobei die freien Enden der dritten Nietstifte, insbesondere mittels Ultraschallschweißen, zu Nietköpfen umgeformt sind.

Von Vorteil ist dabei, dass eine bessere und stabilere räumliche Fixierung des zweiten Verschaltungselements auf dem Trägerteil erreichbar ist, so dass ein Bewegen des Verschaltungselements relativ zum Trägerteil verhindert ist.

Bei einer vorteilhaften Ausgestaltung sind der von dem zweiten Verschaltungselement in Radialrichtung überdeckte Bereich und der von mindestens einem der ersten Verschaltungselemente, insbesondere der von allen ersten Verschaltungselementen, in Radialrichtung überdeckte Bereich gleich.

Von Vorteil ist dabei, dass Bauraum in Radialrichtung einsparbar ist, so dass eine kompakte Bauform der Verschaltungseinheit in Radialrichtung erreichbar ist.

Bei einer vorteilhaften Ausgestaltung überlappen der von dem zweiten Verschaltungselement in Umfangs- und Radialrichtung überdeckte Bereich und der von mindestens einem der ersten Verschaltungselemente, insbesondere der von zwei der ersten Verschaltungselemente, in Umfangs- und Radialrichtung überdeckte Bereich.

Von Vorteil ist dabei, dass eine kompakte Bauform der Verschaltungseinheit erreichbar ist.

Bei einer vorteilhaften Ausgestaltung sind mehrere, insbesondere genau drei, dritte Verschaltungselemente vorgesehen sind, welche jeweils einen ersten Kontaktierungsbereich und einen zweiten Kontaktierungsbereich aufweisen, welche insbesondere verschiedenartig ausgeführt sind, wobei jeweils der erste Kontaktierungsbereich eines dritten Verschaltungselementes jeweils mit einem der Spulenanschlüsse verbunden ist, insbesondere elektrisch verbunden, insbesondere mittels Laserschweißen stoffschlüssig verbunden.

Von Vorteil ist dabei, dass ein einfaches Anschließen der, insbesondere drei, Phasenleiter an den Elektromotor ermöglicht ist. Die dritten Verschaltungselemente sind mit dem ersten Kontaktierungsbereich mit denjenigen Spulen elektrisch verbunden, welche jeweils an eine Phase angeschlossen werden sollen. Der zweite Kontaktierungsbereich eignet sich dann zum Anschluss der dritten Verschaltungselemente an die Phasenleiter, um so eine elektrische Verbindung zwischen Phasenleiter und Spule herzustellen. Die Verbindung erfolgt beispielsweise dadurch, dass Kabelschuhe der Phasenleiter mittels Schraube und Mutter am zweiten Befestigungsbereich befestigt werden.

Bei einer vorteilhaften Ausgestaltung weist jedes der dritten Verschaltungselemente einen ersten und einen zweiten Befestigungsbereich zur formschlüssigen und/oder stoffschlüssigen Verbindung mit dem Trägerteil auf, insbesondere wobei jeder der beiden Befestigungsbereiche jeweils eine in Axialrichtung durchgehende Ausnehmung aufweist und wobei durch jede der Ausnehmungen jeweils ein vierter Nietstift hindurchführbar ist, insbesondere wobei die freien Enden der vierten Nietstifte, insbesondere mittels Ultraschallschweißen, zu Nietköpfen umgeformt sind.

Von Vorteil ist dabei, dass eine bessere und stabilere räumliche Fixierung der dritten Verschaltungselemente auf dem Trägerteil erreichbar ist, so dass ein Bewegen der Verschaltungselemente relativ zum Trägerteil verhindert ist.

Bei einer vorteilhaften Ausgestaltung weist jedes der dritten Verschaltungselemente einen dritten Befestigungsbereich zur formschlüssigen und/oder stoffschlüssigen Verbindung mit dem Trägerteil auf, wobei der dritte Befestigungsbereich an den ersten Kontaktierungsbereich des jeweiligen dritten Verschaltungselements angrenzt,
insbesondere wobei der dritte Befestigungsbereich eine in Axialrichtung durchgehende Ausnehmung aufweist durch welche jeweils ein fünfter Nietstift hindurchführbar ist, insbesondere wobei die freien Enden der fünften Nietstifte, insbesondere mittels Ultraschallschweißen, zu Nietköpfen umgeformt sind.

Von Vorteil ist dabei, dass die räumliche Fixierung der dritten Verschaltungselemente auf dem Trägerteil weiter verbessert ist.

Bei einer vorteilhaften Ausgestaltung sind die dritten Verschaltungselemente baugleich ausgeführt.

Von Vorteil ist dabei, dass weniger verschiedenartige Verschaltungselemente hergestellt werden müssen und so der Fertigungsaufwand reduziert ist. Die Verschaltungseinheit ist mit einer Sorte von dritten Verschaltungselementen fertigbar.

Bei einer vorteilhaften Ausgestaltung weist das Trägerteil an seinem äußeren Umfang mehrere Führungsbereiche zur Führung der Spulenanschlüsse in axialer Richtung auf, wobei jedem mit einem Spulenanschluss verbundenen Kontaktierungsbereich jeweils ein Führungsbereich zugeordnet ist, insbesondere wobei die Form des Führungsbereichs im Wesentlichen der Form des jeweils zugeordneten Kontaktierungsbereiches gleicht.

Von Vorteil ist dabei, dass beim Verfahren zur Herstellung des Elektromotors der Schritt der Kontaktierung der Spulenanschlüsse mit der Verschaltungseinheit zuverlässiger durchführbar ist. Durch die Führung der Spulenanschlüsse wird sichergestellt, dass die Spulenanschlüsse im Wesentlichen parallel zur Drehachse ausgerichtet sind. Die Spulenanschlüsse können vorteilhafterweise an den Führungsbereichen festgeklemmt werden und erleichtern so den Verfahrensschritt der Herstellung einer stoffschlüssigen Verbindung zwischen Kontaktierungsbereich und Spulenanschluss. Dadurch ist eine automatisierte Fertigung erreichbar.

Erfindungsgemäß ist zumindest eines der ersten Verschaltungselemente derart von einem,

insbesondere mittels Spritzgussverfahren hergestellten, vorgefertigten Isolierteil aus Isoliermaterial umgeben, dass das umgebene erste Verschaltungselement und das umgebende Isolierteil in Umfangsrichtung beidseitig formschlüssig verbunden sind und/oder in Axialrichtung beidseitig formschlüssig verbunden sind und/oder in Radialrichtung einseitig formschlüssig verbunden sind, insbesondere wobei in Umfangsrichtung nur jedes zweite der ersten Verschaltungselemente derart von einem jeweiligen Isolierteil umgeben ist.

Von Vorteil ist dabei, dass eine ausreichende elektrische Isolierung der ersten Verschaltungselemente untereinander einfach erreichbar ist. Mittels vorgefertigter Isolierteile sind geringere Abstände zwischen den ersten Verschaltungselementen realisierbar bei gleichzeitiger Gewährleistung von entsprechenden Kriechstrecken zur ausreichenden elektrischen Isolation. In einer zur Erfindung nicht gehörenden Alternative wäre ein nachträgliches Umspritzen der ersten Verschaltungselemente mit einem Isoliermaterial ausführbar. Dieses Verfahren ist jedoch schwieriger ausführbar und teurer.

Bei einer vorteilhaften Ausgestaltung sind die Spulenanschlüsse stoffschlüssig mittels Laserschweißen mit den Kontaktierungsbereichen der ersten und/oder mit den Kontaktierungsbereichen des zweiten und/oder mit jeweils einem Kontaktierungsbereich der dritten Verschaltungselemente verbunden, insbesondere wobei die zu verbindenden Kontaktierungsbereiche eine V-förmige Einkerbung zur Aufnahme eines Spulenanschlusses in Form eines Wicklungsdrahtes aufweisen, insbesondere wobei die V-förmige Einkerbung einen Kreisbogenabschnitt aufweist, insbesondere wobei der Radius des Kreisbogenabschnitts höchstens so groß ist wie der Radius des Wicklungsdrahtes.

Von Vorteil ist dabei, dass mittels Laserschweißen die Kontaktierung derart schnell ausführbar ist, dass es zu keiner nennenswerten Erwärmung der ersten Verschaltungselemente kommt. Dadurch können die Schweißstellen nahe an Teilen aus Isoliermaterial, insbesondere Kunststoff, liegen, ohne diese durch Erwärmung zu schädigen und/oder zu verformen. Dadurch ist es insbesondere möglich, einen Kontaktierungsbereich räumlich nah, also benachbart, an einem Befestigungsbereich anzuordnen, was zu einer kompakteren Bauform führt.

Die V-förmige Einkerbung hat den Vorteil, dass für verschiedene Durchmesser von Wicklungsdrähten immer eine sichere und zuverlässige elektrische Verbindung herstellbar ist. Der Draht liegt immer symmetrisch zur Symmetrieachse der Kerbe und berührt den Kontaktierungsbereich daher an mindestens zwei Stellen. Daher ist eine Art von Kontaktierungsbereich für verschiedene Drahtdurchmesser verwendbar.

Wichtige Merkmale der Erfindung bei dem Verfahren zur Herstellung eines Elektromotors sind die aufeinanderfolgenden Schritte:
i) Bereitstellen eines, insbesondere im Wesentlichen ringförmigen, Trägerteils aus einem Isoliermaterial, insbesondere wobei das Trägerteil mittels Spritzgussverfahren hergestellt wird,
ii) Anordnen mehrerer baugleicher erster Verschaltungselemente in Umfangsrichtung auf dem Trägerteil, wobei die ersten Verschaltungselemente jeweils zwei, insbesondere genau zwei, Kontaktierungsbereiche aufweisen und die ersten Verschaltungselemente derart angeordnet werden, dass der von einem der ersten Verschaltungselemente in Umfangs- und Radialrichtung überdeckte Bereich jeweils einen von einem benachbarten ersten Verschaltungselement in Umfangs- und Radialrichtung überdeckten Bereich überlappt, wobei die ersten Verschaltungselemente voneinander beabstandet angeordnet werden,
iii) Verbinden der ersten Verschaltungselemente mit dem Trägerteil, insbesondere formschlüssiges und/oder stoffschlüssiges Verbinden, zur Bildung einer Verschaltungseinheit,
iv) elektrisches Verbinden, insbesondere mittels Laserschweißen stoffschlüssiges Verbinden, eines jeden der Kontaktierungsbereiche der ersten Verschaltungselemente mit jeweils einem Spulenanschluss einer von mehreren, jeweils zwei Spulenanschlüssen aufweisenden Spulen, welche an einem Stator des Elektromotors angeordnet sind, zur Verschaltung der Spulen zu einer mehrphasigen Wicklung,
wobei in Schritt ii) die ersten Verschaltungselemente derart angeordnet werden, dass in Umfangsrichtung mindestens eins der ersten Verschaltungselemente von einem, insbesondere mittels Spritzgussverfahren hergestellten, Isolierteil aus einem Isoliermaterial umgeben ist, wobei das umgebene erste Verschaltungselement und das umgebende Isolierteil in Umfangsrichtung beidseitig formschlüssig verbunden sind und/oder in Axialrichtung beidseitig formschlüssig verbunden sind und/oder in Radialrichtung einseitig formschlüssig verbunden sind.

Von Vorteil ist dabei, dass eine kompakte Bauform der Verschaltungseinheit erreichbar ist.

Erindungsgemäß werden, in Schritt ii), die ersten Verschaltungselemente derart angeordnet, dass in Umfangsrichtung mindestens eins der ersten Verschaltungselemente (30, 90), insbesondere nur jedes zweite der ersten Verschaltungselemente von einem, insbesondere mittels Spritzgussverfahren hergestellten, vorgefertigten

Isolierteil aus einem Isoliermaterial umgeben ist, wobei das umgebene erste Verschaltungselement und das umgebende Isolierteil in Umfangsrichtung beidseitig formschlüssig verbunden sind und/oder in Axialrichtung beidseitig formschlüssig verbunden sind und/oder in Radialrichtung einseitig formschlüssig verbunden sind.

Von Vorteil ist dabei, dass eine ausreichende elektrische Isolierung der ersten Verschaltungselemente untereinander einfach erreichbar ist. Mittels vorgefertigter Isolierteile sind geringere Abstände zwischen den ersten Verschaltungselementen realisierbar bei gleichzeitiger Gewährleistung von entsprechenden Kriechstrecken zur ausreichenden elektrischen Isolation. In einer zur Erfindung nicht gehörenden Alternative wäre ein nachträgliches Umspritzen der ersten Verschaltungselemente mit einem Isoliermaterial ausführbar. Dieses Verfahren ist jedoch schwieriger ausführbar und teurer.

Bei einer vorteilhaften Ausgestaltung wird, insbesondere in Schritt ii), ein zweites Verschaltungselement auf dem Trägerteil angeordnet, wobei das zweite Verschaltungselement drei, insbesondere genau drei, Kontaktierungsbereiche aufweist,
wobei, insbesondere in Schritt iii), zur Bildung der Verschaltungseinheit das zweite Verschaltungselement mit dem Trägerteil verbunden wird, insbesondere formschlüssig und/oder stoffschlüssig verbunden wird,
wobei, insbesondere in Schritt iv), jeder der Kontaktierungsbereiche des zweiten Verschaltungselementes mit jeweils einem der Spulenanschlüsse verbunden wird, insbesondere elektrisch verbunden wird, insbesondere mittels Laserschweißen stoffschlüssig verbunden wird.

Von Vorteil ist dabei, dass eine Verschaltung der Spulen in Sternpunktschaltung ermöglicht ist. Das zweite Verschaltungselement dient dabei als Sternpunktelement zur Verbindung von drei verschiedenen Spulenanschlüssen.

Bei einer vorteilhaften Ausgestaltung werden, insbesondere in Schritt ii), drei dritte Verschaltungselemente auf dem Trägerteil angeordnet, wobei die dritten Verschaltungselemente jeweils zwei, insbesondere verschiedenartige, Kontaktierungsbereiche aufweisen, wobei, insbesondere in Schritt iii), zur Bildung der Verschaltungseinheit die dritten Verschaltungselemente mit dem Trägerteil verbunden werden, insbesondere formschlüssig

und/oder stoffschlüssig verbunden werden, wobei, insbesondere in Schritt iv), jeweils einer der beiden Kontaktierungsbereiche der dritten Verschaltungselemente mit jeweils einem der Spulenanschlüsse verbunden wird, insbesondere elektrisch verbunden wird, insbesondere mittels Laserschweißen stoffschlüssig verbunden wird.

Von Vorteil ist dabei, dass ein einfaches Anschließen der, insbesondere drei, Phasenleiter an den Elektromotor ermöglicht ist. Die dritten Verschaltungselemente sind mit einem ihrer Kontaktierungsbereiche mit denjenigen Spulen verbunden, welche jeweils an eine Phase angeschlossen werden sollen. Der Anschluss dieser Spulen an die Phasenleiter erfolgt dann einfach beispielsweise über Kabelschuhe.

Bei einer vorteilhaften Ausgestaltung werden, insbesondere nach Schritt iv), der Stator mit Spulen sowie die mit den Spulenanschlüssen verbundene Verschaltungseinheit mit Vergussmasse vergossen, insbesondere derart, dass jeweils die Kontaktierungsbereiche der dritten Verschaltungselemente, welche nicht mit einem Spulenanschluss verbunden sind, frei von Vergussmasse verbleiben.

Von Vorteil ist dabei, dass eine stabile mechanische Fixierung der Verschaltungseinheit auf dem Stator realisierbar ist.

Weitere Vorteile ergeben sich aus den Unteransprüchen.

Die Erfindung wird nun anhand von Abbildungen näher erläutert:
In der Figur 1 ist eine auf einem Stator eines erfindungsgemäßen Elektromotors angeordnete erste Ausführungsform einer Verschaltungseinheit in einer perspektivischen Ansicht gezeigt.
In der Figur 2A ist der Stator und die erste Ausführungsform der Verschaltungseinheit aus Figur 1 in einer Seitenansicht gezeigt.
In der Figur 2B ist der Stator und die erste Ausführungsform der Verschaltungseinheit aus Figur 1 in einer Draufsicht gezeigt.
In der Figur 3A ist ein erstes Verschaltungselement der ersten Ausführungsform der Verschaltungseinheit aus Figur 1 in einer perspektivischen Ansicht gezeigt.
In der Figur 3B ist das erste Verschaltungselement der Figur 3A in einer Seitenansicht gezeigt.
In der Figur 3C ist eine Projektion in Axialrichtung auf eine zur Drehachse senkrechte Ebene des ersten Verschaltungselements aus den Figuren 3A und 3B gezeigt.
In der Figur 4 ist ein zweites Verschaltungselement der ersten Ausführungsform der Verschaltungseinheit aus Figur 1 in einer perspektivischen Ansicht gezeigt.
In der Figur 5A ist ein drittes Verschaltungselement der ersten Ausführungsform der Verschaltungseinheit aus Figur 1 in einer perspektivischen Ansicht gezeigt.
In der Figur 5B ist das dritte Verschaltungselement aus Figur 5A in einer Draufsicht gezeigt.
In der Figur 6 ist das Trägerteil der ersten Ausführungsform der Verschaltungseinheit aus Figur 1 mit dem darauf angeordneten zweiten Verschaltungselement aus Figur 4 in einer perspektivischen Ansicht gezeigt.
In der Figur 7A ist das erste Verschaltungselement aus Figur 3A mit einem aufgeschobenen Isolierteil in einer perspektivischen Ansicht gezeigt.
In der Figur 7B sind zwei erste Verschaltungselemente in einer perspektivischen Ansicht gezeigt.
In der Figur 7C ist eine Projektion in Axialrichtung auf eine zur Drehachse senkrechte Ebene der zwei ersten Verschaltungselemente aus Figur 7B gezeigt.
In der Figur 8 ist das Trägerteil der ersten Ausführungsform der Verschaltungseinheit aus Figur 1 mit darauf angeordneten Verschaltungselementen in einer perspektivischen Ansicht gezeigt.
In der Figur 9A ist ein Isolierteil der zweiten Ausführungsform der Verschaltungseinheit in einer perspektivischen Ansicht gezeigt.
In der Figur 9B ist ein erstes Verschaltungselement der zweiten Ausführungsform der Verschaltungseinheit in einer perspektivischen Ansicht gezeigt.
In der Figur 9C ist das Isolierteil aus Figur 9A zusammen mit dem ersten Verschaltungselement aus Figur 9B in einer perspektivischen Ansicht gezeigt.
In der Figur 9D sind das Isolierteil und das erste Verschaltungselement aus Figur 9C und ein weiteres erstes Verschaltungselement in einer perspektivischen Ansicht gezeigt.
In der Figur 10 ist eine Verschaltungseinheit der zweiten Ausführungsform in einer perspektivischen Ansicht gezeigt.

Nachfolgend werden Ausführungsbeispiele der Erfindung anhand der beiliegenden Zeichnungen erläutert, wobei gleiche Bezugszeichen für gleichwirkende Teile verwendet werden und nicht mit jeder Figur erneut beschrieben werden.

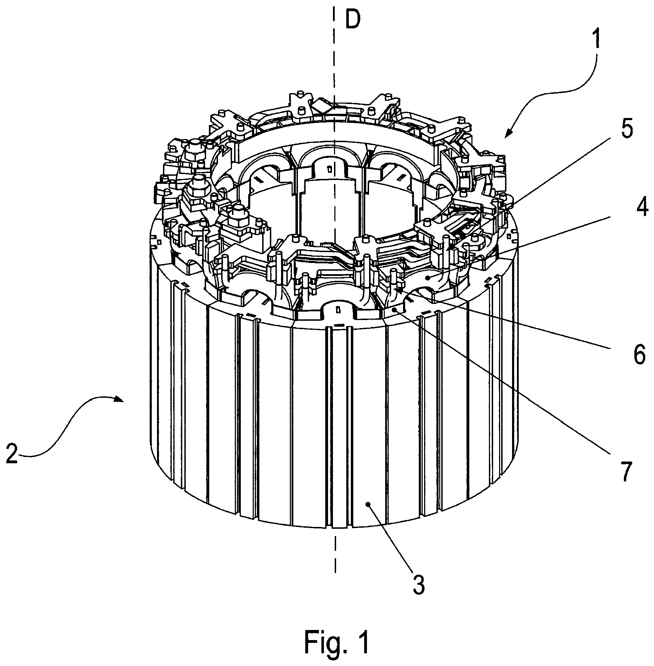

Figur 1 zeigt in perspektivischer Darstellung eine erste Ausführungsform einer Verschaltungseinheit 1, welche an einem axialen Ende eines Stators 2 eines nicht weiter dargestellten erfindungsgemäßen Elektromotors angeordnet ist. Der Stator 2 des Elektromotors ist aus einzelnen Statorsegmenten 3 aufgebaut. In dem gezeigten Ausführungsbeispiel weist der Stator 2 zwölf Statorsegmente 3 auf. Die Zahl zwölf ist dabei nur beispielhaft, es sind auch andere Anzahlen von Statorsegmenten denkbar. Die Statorsegmente 3 sind in diesem Ausführungsbeispiel vorzugsweise als stanzpaketierte Blechpakete ausgeführt.

Die Statorsegmente 3 sind so miteinander verbunden, dass sie einen im Wesentlichen zylindrischen Stator 2 bilden. Im Inneren des Stators 3 ist ein nicht gezeigter Rotor angeordnet, welcher um eine Drehachse D drehbar gelagert ist. Rotor und Stator 2 sind konzentrisch zur Drehachse D angeordnet. Der Rotor weist vorzugsweise Permanentmagnete auf und der Elektromotor ist vorzugsweise als permanenterregter Synchronmotor ausgeführt.

Jedes Statorsegment 3 weist einen Statorzahn auf, um welchen jeweils eine Spule 4 gewickelt ist. Die Spule ist aus isoliertem Wicklungsdraht gebildet. Die beiden Enden des Wicklungsdrahtes sind abisoliert und bilden die beiden Spulenanschlüsse 5, 6. Die Spulen 4 sind in Figur 1 lediglich schematisch gezeichnet. Zwischen den Spulen 4 und den Statorsegmenten 3 befindet sich zur elektrischen Isolation beispielsweise Isolierpapier 7.

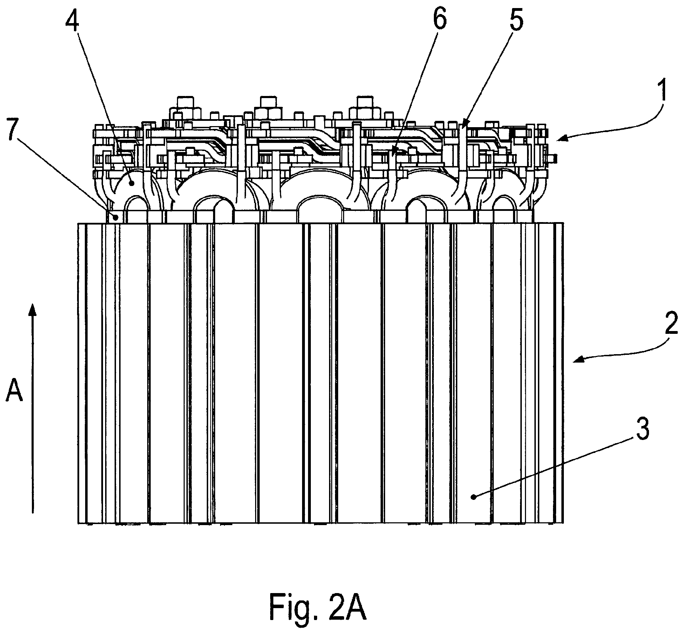

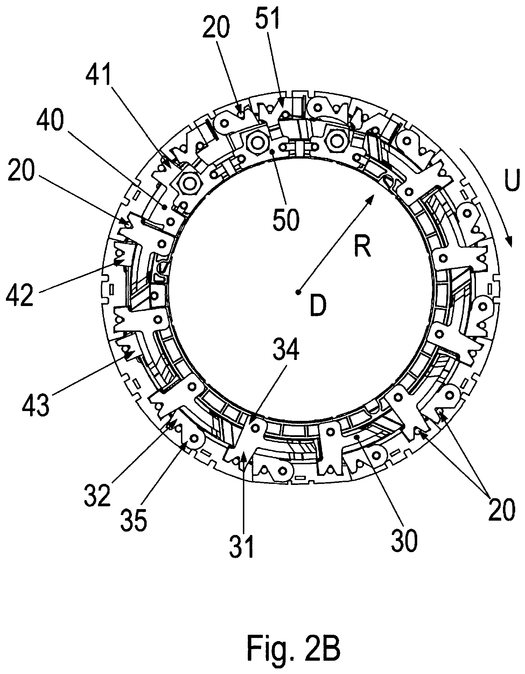

Figur 2A zeigt die Anordnung aus Figur 1 in einer Seitenansicht. Die Richtung A, welche parallel zur Drehachse D verläuft, wird mit Axialrichtung bezeichnet. Figur 2B zeigt die Anordnung aus Figur 1 in einer Draufsicht. Die Radialrichtung R ist wie gezeigt ausgehend von der Drehachse D definiert. Die Radialrichtung R verläuft also senkrecht zur Axialrichtung A. Die Umfangsrichtung U verläuft entlang des Umfangs des Stators 2 und ist ebenfalls in Figur 2B gezeigt.

Die einzelnen Spulen 4 sind mittels der Verschaltungseinheit 1 zu einer mehrphasigen Wicklung verschaltet. In dem vorliegenden Ausführungsbeispiel sind die zwölf Spulen 4 in Sternschaltung miteinander verschaltet, wobei eine dreiphasige Wicklung gebildet ist. Jeder Phase sind daher vier einzelne Spulen 4 zugeordnet. Innerhalb einer Phase sind die vier Spulen 4 mittels der Verschaltungseinheit 1 in Reihe geschaltet. Alle drei Phasen wiederum sind im Sternpunkt miteinander verbunden. Die einzelnen Elemente der Verschaltungseinheit 1 werden der besseren Übersicht in den folgenden Figuren erläutert.

Die erfindungsgemäße Verschaltungseinheit 1 umfasst mehrere Verschaltungselemente 30, 40, 50 zur Verschaltung der Spulenanschlüsse sowie ein Trägerteil 60 zur Aufnahme der Verschaltungselemente 30, 40, 50. Um die in diesem Ausführungsbeispiel gezeigten zwölf Spulen 4 zu einer dreiphasigen Wicklung in Sternschaltung zu verschalten, sind neun erste Verschaltungselemente 30 und ein zweites Verschaltungselement 40 notwendig. Wenn n die Anzahl der Phasen und z die Anzahl der Statorsegmente 3 und dementsprechend die Anzahl der Spulen 4 bezeichnet, so sind für eine Sternschaltung (z - n) erste Verschaltungselemente 30 und ein zweites Verschaltungselement 40 notwendig. Das zweite Verschaltungselement 40 ist also nur für eine Verschaltung in Sternschaltung notwendig. Für andere Arten der Verschaltung, beispielsweise Dreiecksschaltung, ist es verzichtbar.

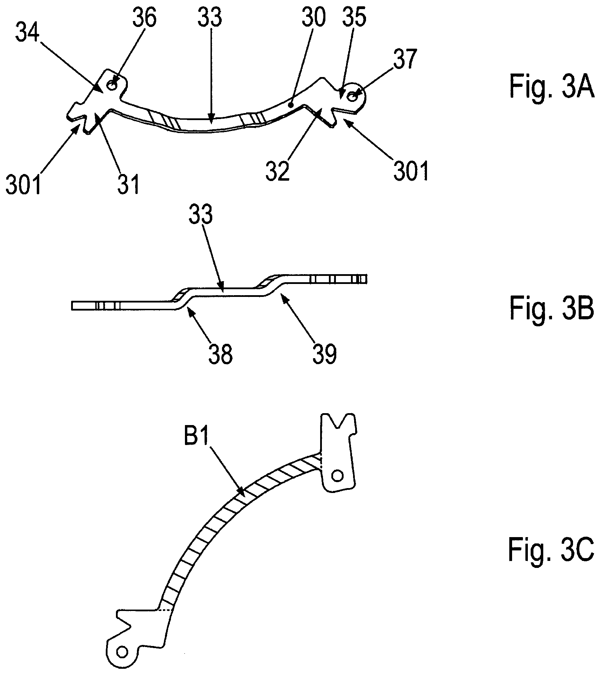

Figur 3A zeigt ein erstes Verschaltungselement 30 in perspektivischer Ansicht. Das erste Verschaltungselement 30 ist aus Metallblech, vorzugsweise Stahlblech oder Kupferblech, und es ist vorzugsweise als Stanz-Biegeteil gefertigt. Im vorliegenden Ausführungsbeispiel umfasst das erste Verschaltungselement 30 einen ersten Kontaktierungsbereich 31 und einen zweiten Kontaktierungsbereich 32. Die beiden Kontaktierungsbereiche 31, 32 sind voneinander beabstandet. Zwischen den beiden Kontaktierungsbereichen 31, 32 ist ein Verbindungsbereich 33 angeordnet. Der Verbindungsbereich 33 verbindet die beiden Kontaktierungsbereiche 31, 32. Die Kontaktierungsbereiche 31, 32 dienen zur elektrischen und mechanischen Verbindung des ersten Verschaltungselementes 30 mit den Spulenanschlüssen 5, 6. Jeweils ein Kontaktierungsbereich 31, 32 ist dabei mit jeweils einem Spulenanschluss 5, 6 verbunden. Die Kontaktierungsbereiche 31, 32 weisen eine V-förmige Einkerbung 301 auf zur Aufnahme eines Spulenanschlusses 5, 6 in Form eines Wicklungsdrahts.

Zusätzlich zu den Kontaktierungsbereichen 31, 32 umfasst das erste Verschaltungselement 30 einen ersten Befestigungsbereich 34 und einen zweiten Befestigungsbereich 35. Die Befestigungsbereiche 34, 35 dienen zur Befestigung des ersten Verschaltungselementes 30 auf dem Trägerteil 60. In dem vorliegenden Ausführungsbeispiel weisen die Befestigungsbereiche 34, 35 jeweils eine durchgehende Ausnehmung 36, 37 in Form eines zylindrischen Loches auf. Es sind alternativ auch halboffene Ausnehmungen beispielsweise in Form einer axial verlaufenden Nut ausführbar.

Figur 3B zeigt das erste Verschaltungselement 30 aus Figur 3A in einer Seitenansicht. Im vorliegenden Ausführungsbeispiel weist das erste Verschaltungselement eine erste Stufe 37 und eine zweite Stufe 38 auf. Diese Stufen 37, 38 werden vorzugsweise durch Biegen hergestellt. Aufgrund dieser Stufen 37, 38 weisen die ersten und die zweiten Befestigungsbereiche 34, 35 unterschiedliche axiale Positionen auf.

Figur 3C zeigt eine senkrechte Projektion des ersten Verschaltungselements 30 aus Figur 3A auf eine zur Drehachse senkrechte Ebene. Die Stufen 38, 39 aus Figur 3B sind daher nicht erkennbar. Der schraffierte Bereich B1 zeigt dabei den vom Verbindungsbereich 33 in Umfangs- und Radialrichtung überdeckten Bereich.

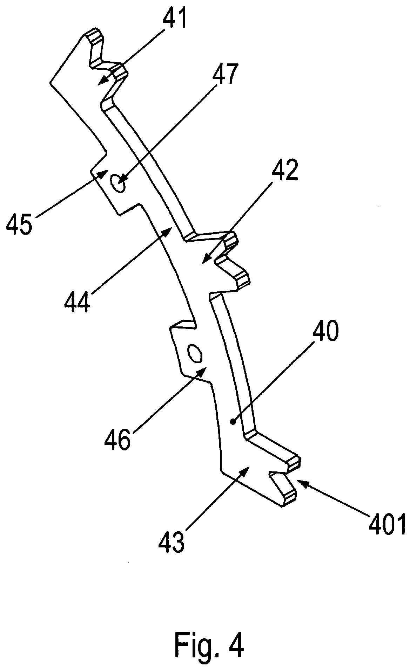

Figur 4 zeigt ein zweites Verschaltungselement 40 in perspektivischer Ansicht. Das zweite Verschaltungselement 40 ist aus Metallblech, vorzugsweise Stahlblech oder Kupferblech, und es ist vorzugsweise als Stanz-Biegeteil gefertigt. Im vorliegenden Ausführungsbeispiel umfasst das zweite Verschaltungselement 40 einen ersten Kontaktierungsbereich 41, einen zweiten Kontaktierungsbereich 42 und einen dritten Kontaktierungsbereich 43. Die drei Kontaktierungsbereiche 41, 42, 43 sind voneinander beabstandet. Zwischen dem ersten Kontaktierungsbereich 41 und dem dritten Kontaktierungsbereich 43 ist ein Verbindungsbereich 44 angeordnet. Der zweite Kontaktierungsbereich 42 ist ebenfalls am Verbindungsbereich 44 angeordnet. Der Verbindungsbereich 44 verbindet also die drei Kontaktierungsbereiche 41, 42, 43 miteinander. Die Kontaktierungsbereiche 41, 42, 43 dienen zur elektrischen und mechanischen Verbindung des zweiten Verschaltungselementes 40 mit den Spulenanschlüssen 5, 6. Jeweils ein Kontaktierungsbereich 41, 42, 43 ist dabei mit jeweils einem Spulenanschluss 5, 6 verbunden. Die Kontaktierungsbereiche 41, 42, 43 weisen eine V-förmige Einkerbung 401 auf zur Aufnahme eines Spulenanschlusses in Form eines Wicklungsdrahts. Das zweite Verschaltungselement 40 bildet bei einer Verschaltung von drei Phasen in Sternschaltung den Sternpunkt, an dem die drei Phasen miteinander verbunden sind.

Zusätzlich zu den Kontaktierungsbereichen 41, 42, 43 umfasst das zweite Verschaltungselement 40 einen ersten Befestigungsbereich 45 und einen zweiten Befestigungsbereich 46. Die Befestigungsbereiche 45, 46 dienen zur Befestigung des zweiten Verschaltungselementes 40 auf dem Trägerteil 60. In dem vorliegenden Ausführungsbeispiel weisen die Befestigungsbereiche 45, 46 jeweils eine durchgehende Ausnehmung 47 in Form eines zylindrischen Loches auf. Es sind alternativ auch halboffene Ausnehmungen beispielsweise in Form einer axial verlaufenden Nut ausführbar.

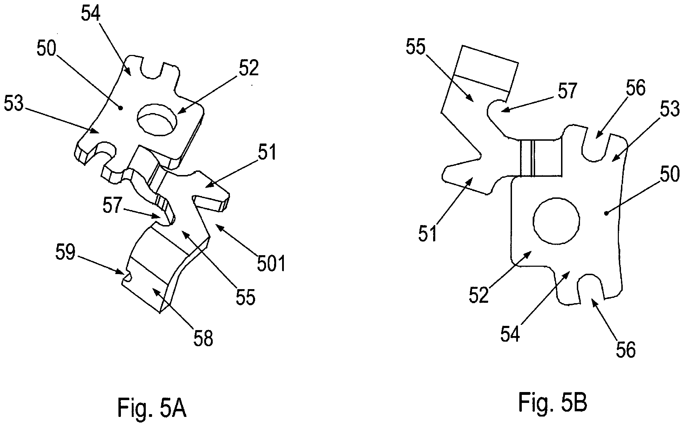

Figur 5A zeigt ein drittes Verschaltungselement 50 in perspektivischer Ansicht. Das dritte Verschaltungselement 50 ist aus Metallblech, vorzugsweise Stahlblech oder Kupferblech, und es ist vorzugsweise als Stanz-Biegeteil gefertigt. Im vorliegenden Ausführungsbeispiel umfasst das dritte Verschaltungselement 50 einen ersten Kontaktierungsbereich 51 und einen zweiten Kontaktierungsbereich 52. Die beiden Kontaktierungsbereiche 51, 52 sind voneinander beabstandet. Der erste Kontaktierungsbereich 51 dient zur elektrischen und mechanischen Verbindung des dritten Verschaltungselementes 50 mit einem Spulenanschluss 5, 6 und weist hierzu eine V-förmige Einkerbung 501 auf. Der zweite Kontaktierungsbereich 52 dient zur elektrischen und mechanischen Verbindung des dritten Verschaltungselementes 50 mit einem Phasenleiter. Die dritten Verschaltungselemente 50 bilden also die Anschlüsse des Elektromotors an die Phasen U, V, W. Bei einer dreiphasigen Wicklung werden daher drei dritte Verschaltungselemente 50 benötigt. Die Verbindung zwischen den dritten

Verschaltungselementen 50 und den Phasenleitern kann direkt oder indirekt über eine Schraube 80 mit dazugehöriger Mutter 81 erfolgen. Prinzipiell kann auch eine direkte Verbindung zwischen den Phasenleitern und den Spulenanschlüssen 5, 6 hergestellt werden, so dass die dritten Verschaltungselemente 50 verzichtbar sind. Die dritten Verschaltungselemente 50 vereinfachen jedoch den Herstellungsprozess des Elektromotors und sorgen für ein einfacheres Anschließen der Phasenleiter an den Elektromotor. Im vorliegenden Ausführungsbeispiel weist der zweite Kontaktierungsbereich 52 eine durchgehende Ausnehmung auf. Durch diese Ausnehmung wird eine Schraube 80 hindurchgeführt, welche als Anschluss für einen Kabelschuh des Phasenleiters dient. Zur Befestigung des Kabelschuhs an dem dritten Verschaltungselement wird eine Mutter 81 verwendet.

Zusätzlich zu den Kontaktierungsbereichen 51, 52 umfasst das dritte Verschaltungselement 50 einen ersten Befestigungsbereich 53, einen zweiten Befestigungsbereich 54 und einen dritten Befestigungsbereich 55. Die Befestigungsbereiche 53, 54, 55 dienen zur Befestigung des dritten Verschaltungselementes 50 auf dem Trägerteil 60. Im vorliegenden Ausführungsbeispiel weisen die Befestigungsbereiche 53, 54, 55 halboffene Ausnehmungen 56, 57 in Form von axial verlaufenen Nuten auf. Es sind alternativ auch geschlossene Ausnehmungen beispielsweise in Form von zylindrischen Löchern ausführbar.

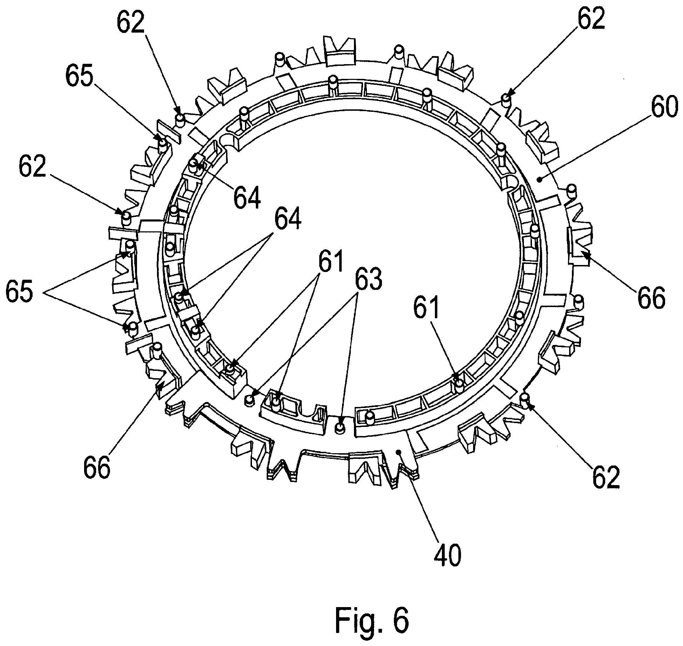

Figur 6 zeigt das Trägerteil 60 mit einem darauf gehalterten zweiten Verschaltungselement 40. Das Trägerteil 60 ist im Wesentlichen ringförmig ausgeführt und es ist in diesem Ausführungsbeispiel als Kunststoffspritzgussteil ausgeführt. Es ist vorzugsweise einstückig ausgeführt. Das Trägerteil 60 wird konzentrisch zur Drehachse D an einem axialen Ende des Stators 2, wie in Figur 1 gezeigt, angeordnet. Das Trägerteil 60 weist axiale Fortsätze 61, 62, 63, 64, 65 in Form von Nietstiften auf. In diesem Ausführungsbeispiel sind die Fortsätze 61, 62, 63, 64, 65 zylinderförmig ausgeführt, es sind aber auch andere Formen denkbar. Die Nietstifte 61, 62, 63, 64 ,65 sind vorzugsweise komplementär zu den entsprechenden Ausnehmungen 36, 37, 47, 56, 57 ausgeführt, um eine stabile mechanische Verbindung zwischen Trägerteil 60 und Verschaltungselement 30, 40, 50 zu ermöglichen.

Das Trägerteil 60 weist erste Nietstifte 61 und zweite Nietstifte 62 zur Halterung des ersten Verschaltungselementes 30 auf. Vorzugsweise weist das Trägerteil 60 dritte Nietstifte 63 zur Halterung des zweiten Verschaltungselementes 40 auf. Vorzugsweise weist das Trägerteil 60 vierte Nietstifte 64 und fünfte Nietstifte 65 zur Halterung der dritten Verschaltungselemente 50 auf.

Die ersten, dritten und vierten Nietstifte sind vorteilhafterweise nahe am inneren Umfang des Trägerteils 60 angeordnet, während die zweiten und fünften Nietstifte nahe am äußeren Umfang des Trägerteils 60 angeordnet sind.

Am äußeren Umfang des Trägerteils 60 verteilt weist dieses mehrere Führungsbereiche 66 auf. Jeder Führungsbereich 66 weist eine V-förmige Einkerbung auf und dient zur Führung der Spulenanschlüsse 5, 6 in axialer Richtung bei der Herstellung der elektrischen Verbindung zwischen den Spulenanschlüssen 5, 6 und den Kontaktierungsbereichen 31, 32, 41, 42, 43, 51. Zu diesem Zweck gleicht die Position eines Führungsbereichs 64 in Radial- und Umfangsrichtung im Wesentlichen der Position eines entsprechenden Kontaktierungsbereiches 31, 32, 41, 42, 43, 51. Ein Führungsbereich 66 ist axial unterhalb eines Kontaktierungsbereiches 31, 32, 41, 42, 43, 51 angeordnet. Die V-förmige Einkerbung des Führungsbereichs 66 ist dabei in radialer Richtung leicht, beispielsweise 0,5 mm, zur inneren Umfangsseite hin versetzt, so dass eine gute Kontaktierung zwischen Spulenanschluss 5,6 und Kontaktierungsbereich 31, 32, 41, 42, 43, 51 sichergestellt ist.

Während des Herstellungsprozesses werden die Spulenanschlüsse 5, 6 zunächst so gebogen, dass sie radial nach außen zeigen. Anschließend wird die Verschaltungseinheit 1 auf dem Stator 2 platziert und dann werden die Spulenanschlüsse 5, 6 so in Position gebogen, dass sie axial nach oben zeigen und die entsprechenden Kontaktierungsbereiche 31, 32, 41, 42, 43, 51 berühren. Hierbei unterstützen die Führungsbereiche 66 den Vorgang der Kontaktierung, so dass die Spulenanschlüsse 5, 6 im Wesentlichen parallel zur axialen Richtung A ausgerichtet sind.

Ausgangspunkt bei dem Verfahren zur Herstellung der Verschaltungseinheit 1 ist das aus Isoliermaterial hergestellte Trägerteil 60. In dem vorliegenden Ausführungsbeispiel wird dieses mittels Spritzgussverfahren aus Kunststoff hergestellt. Danach wird, wie in Figur 6 gezeigt, das zweite Verschaltungselement 40 auf dem Trägerteil 60 angeordnet. Zur Halterung dienen die durchgehenden Ausnehmungen 47 der Befestigungsbereiche 45, 46 des zweiten Verschaltungselementes 40, so dass ein Hindurchführen der dritten Nietstifte 63 durch die Ausnehmungen 47 möglich ist.

In einem nächsten Herstellungsschritt werden die ersten Verschaltungselemente 30 auf dem Trägerteil 60 angeordnet, und zwar derart, dass der von dem Verbindungsbereich 33 eines der ersten Verschaltungselemente 30 in Umfangs- und Radialrichtung überdeckte Bereich (B1, B2) jeweils einen von dem Verbindungsbereich 33 eines anderen der ersten Verschaltungselemente 30 in Umfangs- und Radialrichtung überdeckten Bereich (B1, B2) überlappt. Mit anderen Worten sind die ersten Verschaltungselemente in Umfangsrichtung zumindest teilweise axial übereinandergestapelt, so dass eine kompaktere Bauweise ermöglicht ist.

Zur Halterung der ersten Verschaltungselemente 30 dienen die durchgehenden Ausnehmungen 36, 37 der Befestigungsbereiche 34, 35 der ersten Verschaltungselemente 30, so dass ein Hindurchführen der ersten und zweiten Nietstifte 61, 62 durch die Ausnehmungen 36, 37 möglich ist. Dadurch, dass von den beiden Ausnehmungen 36, 37 eines ersten Verschaltungselementes 30 eine Ausnehmung 36 radial weiter innen angeordnet ist als die andere Ausnehmung 37, ist ein stabiles Halten ermöglicht. Insbesondere wird ein Verkippen der ersten Verschaltungselemente 30 vermieden. Mit anderen Worten weisen die ersten Befestigungsbereiche 34 eine radiale Position auf, welche unterschiedlich zu der radialen Position der zweiten Befestigungsbereiche 35 ist.

Die ersten und zweiten Nietstifte 61, 62 und die ersten Verschaltungselemente 30 sind derart angeordnet und geformt, dass die platzierten ersten Verschaltungselemente 30 sich gegenseitig nicht berühren. Sie sind also voneinander beabstandet angeordnet. Prinzipiell ist dadurch in einer nicht erfindungsgemäßen Variante keine weitere elektrische Isolation notwendig, da der Stator in einem finalen Fertigungsschritt für gewöhnlich mit Vergussmasse vergossen wird, welche als Isolationsmaterial dient.

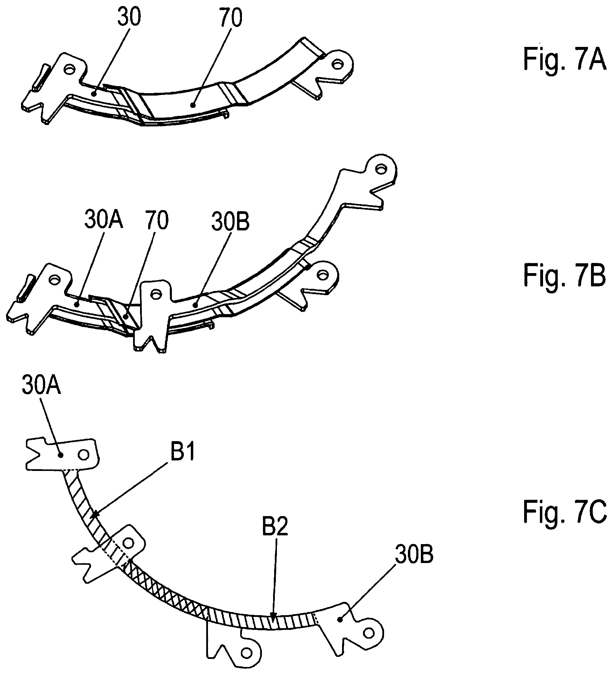

Erfindungsgemäß erfolgt die elektrische Isolation zwischen den ersten Verschaltungselementen 30 durch vorgefertigte Isolierteile. Hierzu werden beispielsweise mittels Spritzgussverfahren Isolierteile 70 aus Kunststoff hergestellt. Figur 7A zeigt ein Isolierteil 70, welches ein erstes Verschaltungselement teilweise umgibt. Das Isolierteil 70 ist in diesem Ausführungsbeispiel so geformt, dass es in radialer Richtung auf das erste Verschaltungselement 30 aufgeschoben werden kann. Das erste Verschaltungselement 30 ist dabei in Umfangsrichtung derart teilweise von dem Isolierteil 70 umgeben, dass ein gegeneinander Verschieben von Isolierteil 70 und erstem Verschaltungselement 30 in dieser Richtung nicht möglich ist. Es ist also eine beidseitige formschlüssige Verbindung in
Umfangsrichtung vorhanden. Darüber hinaus ist das erste Verschaltungselement 30 in Axialrichtung derart teilweise von dem Isolierteil 70 umgeben, dass ein gegeneinander Verschieben von Isolierteil 70 und erstem Verschaltungselement 30 in dieser Richtung nicht möglich ist. Es ist also eine beidseitig formschlüssige Verbindung in Axialrichtung vorhanden. In Radialrichtung ist das erste Verschaltungselement 30 lediglich einseitig formschlüssig mit dem Isolierteil 70 verbunden, so dass ein gegeneinander Verschieben möglich ist.

Es ist vorteilhafterweise möglich, dass in Umfangsrichtung nur jedes zweite der ersten Verschaltungselemente 30 wie oben beschrieben von einem Isolierteil 70 umgeben ist. Figur 7B zeigt das erste Verschaltungselement 30A mit aufgeschobenem Isolierteil 70 aus Figur 7A und zusätzlich ein weiteres erstes Verschaltungselement 30B, welches lediglich auf das Isolierteil 70 aufgelegt ist. Auf dieses weitere erste Verschaltungselement 30B wird dann anschließend wieder ein von einem Isolierteil 70 umgebenes erstes Verschaltungselement 30 angeordnet.

Figur 7C zeigt eine senkrechte Projektion der zwei ersten Verschaltungselemente 30A, 30B aus Figur 7BA auf eine zur Drehachse senkrechten Ebene. Das Isolierteil 70 ist hier nicht dargestellt. Der schraffierte Bereich B1 zeigt dabei wie in Figur 3C den vom Verbindungsbereich 33 eines ersten Verschaltungselements 30 in Umfangs- und Radialrichtung überdeckten Bereich. Analog dazu zeigt der schraffierte Bereich B2 den vom Verbindungsbereich 33 des anderen ersten Verschaltungselements 30B in Umfangs- und Radialrichtung überdeckten Bereich an. Diese beiden Bereiche überlappen teilweise. In diesem Ausführungsbeispiel sind die von den beiden Verbindungsbereichen 33 in Radialrichtung überdeckten Bereiche gleich. Es ist jedoch auch möglich, dass diese verschieden sind.

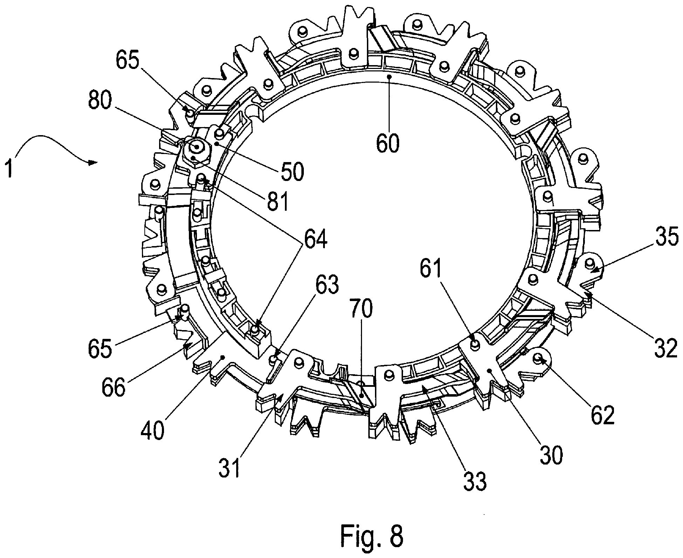

Figur 8 zeigt das Trägerteil 60 und das zweite Verschaltungselement 40 aus Figur 6 mit den darauf angeordneten neun ersten Verschaltungselementen 30 sowie den dazwischen angeordneten Isolierteilen 70. Da nur jedes zweite Verschaltungselement 30 von einem Isolierteil 70 umgeben ist, sind in diesem Ausführungsbeispiel lediglich fünf Isolierteile 70 notwendig. Zusätzlich ist in Figur 8 noch ein drittes Verschaltungselement 50 gezeigt, welches von zwei vierten Nietstiften 64 und einem fünften Nietstift 65 des Trägerteils 60 gehaltert wird. Zur Kontaktierung des dritten Verschaltungselements 50 mit dem Phasenleiter dient eine Vierkantschraube 80 mit dazugehöriger Mutter 81. Der Kopf der Schraube ist axial unterhalb der durchgehenden Ausnehmung des zweiten Befestigungsbereichs 52 angeordnet, so dass die Sechskantmutter 81 von oben zugänglich ist. Dadurch ist eine einfache Kontaktierung des Phasenleiters mit dem dritten Verschaltungselement 50 beispielsweise mittels Kabelschuhe ermöglicht. Neben dem gezeigten dritten Verschaltungselement 50 werden bei diesem Ausführungsbeispiel noch zwei weitere dritte Verschaltungselemente 50 verwendet, welche in Umfangsrichtung gegen den Uhrzeigersinn neben dem gezeigten dritten Verschaltungselement 50 platziert werden. In Figur 1 sind alle drei dritte Verschaltungselemente 50 gezeigt.

Nachdem alle Verschaltungselemente 30, 40, 50 auf dem Trägerteil 60 angeordnet sind, werden diese mit dem Trägerteil 60 verbunden. Hierzu werden im vorliegenden Beispiel die freien Enden der Nietstifte 61, 62, 63, 64, 65 zu Nietköpfen derart umgeformt, dass der Durchmesser der Nietköpfe in der Ebene senkrecht zur Drehachse größer ist als der Durchmesser der entsprechenden Ausnehmungen. Das Umformen kann beispielsweise mittels Ultraschallschweißen oder Heißverstemmen oder Warmprägen erfolgen. Wenn beim Umformen lediglich der Nietstift umgeformt wird, ohne dass dabei eine stoffschlüssige Verbindung zwischen dem Trägerteil und den Verschaltungselementen entsteht, so ist eine formschlüssige Verbindung hergestellt. Es ist jedoch auch denkbar, dass alternativ oder zusätzlich eine stoffschlüssige Verbindung zwischen dem Trägerteil und den Verschaltungselementen hergestellt wird.

Nachdem die Verschaltungselemente 30, 40, 50 mit dem Trägerteil 60 verbunden sind, werden die Spulenanschlüsse 5, 6 mit den entsprechenden Kontaktierungsbereichen 31, 32, 41, 42, 51 der Verschaltungselemente 30, 40, 50 verbunden, um eine elektrische Verbindung herzustellen. Hierzu werden die abisolierten Drahtenden der Spulen in die V-förmigen Kerben 301, 401, 501 der Kontaktierungsbereiche 31, 32, 41, 42, 51 eingelegt und es wird eine stoffschlüssige Verbindung zwischen Draht und Verschaltungselement hergestellt. In diesem Ausführungsbeispiel erfolgt dies mittels Laserschweißen. Es sind jedoch auch andere Methoden ausführbar.

Nachdem die Spulen 4 des Elektromotors auf diese Weise mittels der Verschaltungseinheit 1 zu einer mehrphasigen Wicklung verschaltet wurden, wird der Stator 2 mitsamt der an einem axialen Ende des Stators angeordneten Verschaltungseinheit 1 zur mechanischen Fixierung mit Vergussmasse vergossen. Falls in einer nicht erfindungsgemäßen Variante keine Isolierteile 70 verwendet werden, dient diese Vergussmasse als elektrische Isolation zwischen den Verschaltungselementen 30, 40, 50.

Falls wie in vorliegendem Ausführungsbeispiel gezeigt, drei dritte Verschaltungselemente 50 verwendet werden, ist beim Vergießen darauf zu achten, dass die zweiten Befestigungsbereiche 54 der dritten Verschaltungselemente 50 frei von Vergussmasse bleiben. Um sicherzustellen, dass die dritten Verschaltungselemente 50 ausreichend von der Vergussmasse umschlossen sind und eine stabile Halterung erreicht wird, weisen die dritten Verschaltungselemente 50 vorteilhafterweise Ankerbereiche 58 auf, welche vom dritten Befestigungsbereich axial in Richtung des Stators 2 zeigen. Zur besseren Verankerung in der Vergussmasse weist der Ankerbereich 58 vorteilhafterweise einen Hinterschnitt 59 auf.

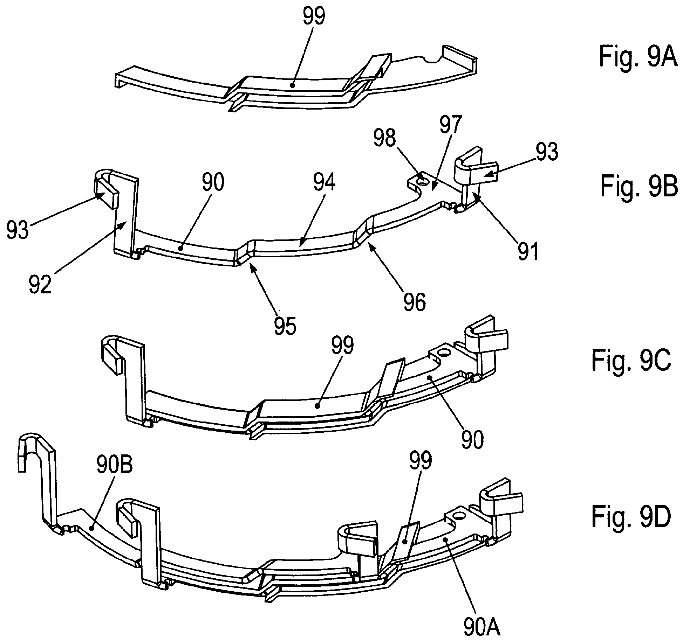

Figur 9B zeigt alternativ für ein zweites Ausführungsbeispiel einer Verschaltungseinheit 1 ein erstes Verschaltungselement 90. Auch dieses erste Verschaltungselement 90 weist einen ersten Kontaktierungsbereich 91 und einen zweiten Kontaktierungsbereich 92 auf. Die Kontaktierungsbereiche 91, 92 umfassen jeweils einen Fangarm 93, mit welchem ein jeweiliger Spulenanschluss 5, 6 einfangbar und kraftschlüssig haltbar, insbesondere zwischen den Fangarmen einklemmbar ist. Darüber hinaus werden die Spulenanschlüsse 5, 6 vorzugsweise mittels Kontaktschweißen stoffschlüssig mit den Fangarmen verbunden. Die Fangarme 93 sind V-förmig geöffnet, wobei die Fangarme die Schenkel des V bilden.

Mittels der Fangarme 93 ist ein schnelles und wenig aufwendiges elektrisches Verbinden der Spulenanschlüsse 5, 6 mit den Kontaktierungsbereichen 91, 92 ermöglicht, indem beim relativen Verdrehen der Verschaltungseinheit 1 gegenüber dem Stator 2 die Spulenanschlüsse 5, 6 in den vom Kontaktierungsbereich 91, 92 aufgespannten Innenbereich, insbesondere also in den vom V des V-förmigen Fangarm 93 aufgespannten Innenbereich, eingefangen werden. Der jeweilige Kontaktierungsbereich 91, 92 fädelt also den jeweiligen Spulenanschluss 5, 6 ein bis zur Verbindungsposition an der Innenspitze des V. Sobald die Verdrehung beendet ist, wird ein Kontaktschweißverbinden ausgeführt. Hierzu werden zunächst die jeweiligen Schenkel des Kontaktierungsbereichs 91, 92, also Fangarme 93, aufeinandergedrückt, indem sie entsprechend gebogen werden, bis der Spulenanschluss 5, 6 kraftschlüssig gehalten wird, insbesondere eingeklemmt wird, von den Fangarmen 93 des Kontaktierungsbereichs 91, 92. Sodann wird ein Kontaktschweißen ausgeführt, damit die elektrische Verbindung zwischen Spulenanschluss 5,6 und Kontaktierungsbereich 91, 92 ohne Lötzinn ausführbar ist.

Wie auch beim ersten Ausführungsbeispiel weist der Verbindungsbereich 94 des ersten Verschaltungselements 90 des zweiten Ausführungsbeispiels zwei axiale Stufen 95, 96 auf.

Im Unterschied zum ersten Ausführungsbeispiel weist dieses erste Verschaltungselement 90 jedoch nur einen Befestigungsbereich 97 auf. Der Befestigungsbereich weist eine durchgehende Ausnehmung 98 auf.

Figur 9A zeigt ein Isolierteil 99, welches auf das erste Verschaltungselement 90 aufgeschoben wird. Figur 9C zeigt das erste Verschaltungselement 90 mit aufgeschobenem Isolierteil 99.

Figur 9D zeigt das erste Verschaltungselement 90A mit aufgeschobenem Isolierteil 99 aus Figur 9C und zusätzlich ein weiteres erstes Verschaltungselement 90B, welches auf dem Isolierteil 99 angeordnet ist. Die von den beiden Verbindungsbereichen 94 der beiden ersten Verschaltungselemente 90A, 90B überdeckten Bereiche in Umfangs- und Radialrichtung überlappen dabei.

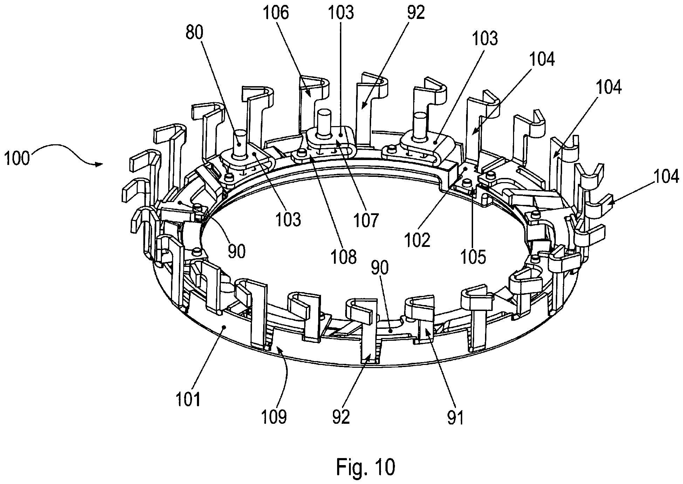

Figur 10 zeigt die Verschaltungseinheit 100 des zweiten Ausführungsbeispiels. Wie beim ersten Ausführungsbeispiel weist die Verschaltungseinheit 100 ein Trägerteil 101 zur Halterung der neun ersten Verschaltungselemente 90, des zweiten Verschaltungselements 102 und der drei dritten Verschaltungselemente 103 auf.

Wie im ersten Ausführungsbeispiel weist das zweite Verschaltungselement 102 drei Kontaktierungsbereiche 104 auf. Wie im ersten Ausführungsbeispiel weist das zweite Verschaltungselement 102 zwei Befestigungsbereiche 105 auf, von denen aufgrund der perspektivischen Darstellung nur einer sichtbar ist.

Wie im ersten Ausführungsbeispiel weist das dritte Verschaltungselement 103 einen ersten Kontaktierungsbereiche 106 zur Kontaktierung mit einem Spulenanschluss 5, 6 und einen zweiten Kontaktierungsbereich 107 zur Kontaktierung mit einem Phasenleiter auf. Im Unterschied zum ersten Ausführungsbeispiel weist das dritte Verschaltungselement 103 nur einen Befestigungsbereich 108 auf.

Die formschlüssige Verbindung zwischen den Verschaltungselementen 90, 102, 103 und dem Trägerteil 101 wird auch im zweiten Ausführungsbeispiel durch Umformen von Nietstiften des Trägerteils, welche durch Ausnehmungen in den jeweiligen Befestigungsbereichen hindurchführbar sind, zu Nietköpfen erreicht.

Die Positionierung der Verschaltungselemente 90, 102, 103 auf dem Trägerteil 101 erfolgt im zweiten Ausführungsbeispiel dadurch, dass das Trägerteil 101 eine umlaufende Ringnut zur Aufnahme der Verschaltungselemente 90, 102, 103 aufweist. Darüber hinaus weist das Trägerteil 101 an seinem äußeren Umfang Ausnehmungen 109 in der Nutwand auf, durch welche jeweils die Kontaktierungsbereiche 91, 92, 104, 106 hindurchführbar sind. Auch dies trägt zur passgenauen Positionierung der Bauteile bei.

In beiden Ausführungsbeispielen sind jeweils alle ersten Verschaltungselemente 30, 90 baugleich ausgeführt, also Gleichteile. Ebenfalls sind auch jeweils die dritten Verschaltungselemente 50, 103 baugleich ausgeführt, also Gleichteile. Dies hat den Vorteil, dass die Teile günstiger hergestellt werden können. Es ist jedoch auch möglich, dass die ersten Verschaltungselemente 30, 90 und/oder die dritten Verschaltungselemente 50, 103 unterschiedlich ausgeführt sind.

In beiden Ausführungsbeispielen sind sowohl die von den Verbindungsbereichen 33, 94 der ersten Verschaltungselemente 30, 90 in Axialrichtung überdeckten Bereiche als auch die von den Verbindungsbereichen 33, 94 der ersten Verschaltungselemente 30, 90 in Radialrichtung überdeckten Bereiche gleich. Es ist jedoch auch möglich, dass diese Bereiche unterschiedlich sind.

### Bezugszeichenliste

- 1: Verschaltungseinheit
- 2: Stator
- 3: Statorsegment
- 4: Spule
- 5: Erster Spulenanschluss
- 6: Zweiter Spulenanschluss
- 7: Isolierpapier
- 30: Erstes Verschaltungselement
- 31: Erster Kontaktierungsbereich eines ersten Verschaltungselements
- 32: Zweiter Kontaktierungsbereich eines ersten Verschaltungselements
- 33: Verbindungsbereich eines ersten Verschaltungselements
- 34: Erster Befestigungsbereich eines ersten Verschaltungselements
- 35: Zweiter Befestigungsbereich eines ersten Verschaltungselements
- 36: Erste durchgehende Ausnehmung in einem ersten Verschaltungselement
- 37: Zweite durchgehende Ausnehmung in einem ersten Verschaltungselement
- 38: Erste Stufe eines ersten Verschaltungselements
- 39: Zweite Stufe eines ersten Verschaltungselements
- 301: V-förmige Einkerbung
- 40: Zweites Verschaltungselement
- 41: Erster Kontaktierungsbereich des zweiten Verschaltungselements
- 42: Zweiter Kontaktierungsbereich des zweiten Verschaltungselements
- 43: Dritter Kontaktierungsbereich des zweiten Verschaltungselements
- 44: Verbindungsbereich des zweiten Verschaltungselements
- 45: Erster Befestigungsbereich des zweiten Verschaltungselements
- 46: Zweiter Befestigungsbereich des zweiten Verschaltungselements
- 47: Durchgehende Ausnehmung im zweiten Verschaltungselement
- 401: V-förmige Einkerbung
- 50: Drittes Verschaltungselement
- 51: Erster Kontaktierungsbereich eines dritten Verschaltungselements
- 52: Zweiter Kontaktierungsbereich eines dritten Verschaltungselements
- 53: Erster Befestigungsbereich eines dritten Verschaltungselements
- 54: Zweiter Befestigungsbereich eines dritten Verschaltungselements
- 55: Dritter Befestigungsbereich eines dritten Verschaltungselements
- 56: Durchgehende Ausnehmung in einem dritten Verschaltungselement
- 57: Durchgehende Ausnehmung in einem dritten Verschaltungselement
- 58: Ankerbereich eines dritten Verschaltungselements
- 60: Trägerteil
- 61: Erster Nietstift
- 62: Zweiter Nietstift
- 63: Dritter Nietstift
- 64: Vierter Nietstift
- 65: Fünfter Nietstift
- 66: Führungsbereich
- 70: Isolierteil
- 80: Schraube
- 81: Mutter
- 90: Erstes Verschaltungselement
- 91: Erster Kontaktierungsbereich eines ersten Verschaltungselements
- 92: Zweiter Kontaktierungsbereich eines ersten Verschaltungselements
- 93: Fangarm
- 94: Verbindungsbereich eines ersten Verschaltungselements
- 95: Axiale Stufe
- 96: Axiale Stufe
- 97: Befestigungsbereich eines ersten Verschaltungselements
- 98: Durchgehende Ausnehmung in einem ersten Verschaltungselement
- 99: Isolierteil
- 100: Verschaltungseinheit
- 101: Trägerteil
- 102: Zweites Verschaltungselement
- 103: Drittes Verschaltungselement
- 104: Kontaktierungsbereich eines zweiten Verschaltungselements
- 105: Befestigungsbereich eines zweiten Verschaltungselements
- 106: Erster Kontaktierungsbereich eines dritten Verschaltungselements
- 107: Zweiter Kontaktierungsbereich eines dritten Verschaltungselements
- 108: Befestigungsbereich eines dritten Verschaltungselements

## Patentansprüche

1. Elektromotor mit einem um eine Drehachse (D) drehbar angeordneten Rotor und mit einem Stator (2), wobei der Stator (2) mehrere Spulen (4) aufweist, wobei jede Spule (4) zwei Spulenanschlüsse (5, 6) aufweist, wobei die Spulen mittels einer Verschaltungseinheit (1, 100) miteinander verschaltet sind, wobei die Verschaltungseinheit (1, 100) ein Trägerteil (60, 101) aus einem Isoliermaterial zur Aufnahme von mehreren voneinander beabstandeten Verschaltungselementen (30, 40, 50, 90, 102, 103) umfasst, wobei mindestens drei erste Verschaltungselemente (30, 90) vorgesehen sind, wobei jedes der ersten Verschaltungselemente (30, 90) jeweils zwei voneinander beabstandete Kontaktierungsbereiche (31, 32, 91, 92) und einen mit den Kontaktierungsbereichen (31, 32, 91, 92) verbundenen Verbindungsbereich (33, 94) aufweist, wobei die Kontaktierungsbereiche (31, 32, 91, 92) jedes ersten Verschaltungselements (30, 90) jeweils mit einem der Spulenanschlüsse (5, 6) an jeweils einer Verbindungsstelle (20) elektrisch verbunden sind, wobei ein von dem Verbindungsbereich (33, 94) eines der ersten Verschaltungselemente (30, 90) in Umfangs- (U) und Radialrichtung (R) überdeckter Bereich (B1, B2) jeweils einen von dem Verbindungsbereich (33, 94) eines anderen der ersten Verschaltungselemente (30, 90) in Umfangs- (U) und Radialrichtung (R) überdeckten Bereich (B1, B2) überlappt, wobei die ersten Verschaltungselemente (30, 90) baugleich ausgeführt sind,
**dadurch gekennzeichnet, dass**
zumindest eines der ersten Verschaltungselemente (30, 90) derart von einem vorgefertigten Isolierteil (70, 99) aus Isoliermaterial umgeben ist, dass das umgebene erste Verschaltungselement (30, 90) und das umgebende Isolierteil (70, 99) in Umfangsrichtung (U) beidseitig formschlüssig verbunden sind und/oder in Axialrichtung (A) beidseitig formschlüssig verbunden sind und/oder in Radialrichtung (R) einseitig formschlüssig verbunden sind.

2. Elektromotor nach Anspruch 1,
**dadurch gekennzeichnet, dass**
das Isolierteil (70, 99) mittels Spritzgussverfahren hergestellt ist.

3. Elektromotor nach Anspruch 1 oder 2,
**dadurch gekennzeichnet, dass**
in Umfangsrichtung (U) nur jedes zweite der ersten Verschaltungselemente (30, 90) derart von einem jeweiligen Isolierteil (70, 99) umgeben ist.

4. Elektromotor nach einem der vorangegangenen Ansprüche,
**dadurch gekennzeichnet, dass**
der Verbindungsbereich (33, 94) jedes der ersten Verschaltungselemente (30, 90) einen, insbesondere näherungsweise rechteckigen, Querschnitt aufweist, dessen Ausdehnung in Axialrichtung geringer ist als dessen Ausdehnung in Radialrichtung.

5. Elektromotor nach einem der vorangegangenen Ansprüche,
**dadurch gekennzeichnet, dass**
alle Verbindungsbereiche (33, 94) der ersten Verschaltungselemente (30, 90) jeweils zwei axiale Stufen (38, 39, 95, 96) aufweisen.

6. Elektromotor nach einem der Ansprüche 1 bis 4,
**dadurch gekennzeichnet, dass**
alle Verbindungsbereiche (33, 94) der ersten Verschaltungselemente (30, 90) jeweils eine in Axialrichtung, insbesondere konstant, verlaufende Neigung aufweisen.

7. Elektromotor nach einem der vorangegangenen Ansprüche,
**dadurch gekennzeichnet, dass**
dass die beiden Kontaktierungsbereiche jedes ersten Verschaltungselements (30, 90) jeweils unterschiedliche axiale Positionen aufweisen.

8. Elektromotor nach einem der vorangegangenen Ansprüche,
**dadurch gekennzeichnet, dass**
jedes der ersten Verschaltungselemente (30, 90) jeweils einen ersten Befestigungsbereich (34, 97) zur formschlüssigen und/oder stoffschlüssigen Verbindung mit dem Trägerteil (60, 101) aufweist, wobei jedes der ersten Verschaltungselemente (30) jeweils einen zweiten Befestigungsbereich (35) zur formschlüssigen und/oder stoffschlüssigen Verbindung mit dem Trägerteil (60) aufweist, wobei die ersten Befestigungsbereiche (34, 97) jedes der ersten Verschaltungselemente (30, 90) jeweils dieselbe erste axiale Position aufweisen und wobei die zweiten Befestigungsbereiche (35) jedes der ersten Verschaltungselemente (30) jeweils dieselbe zweite axiale Position aufweisen, wobei die erste axiale Position und die zweite axiale Position verschieden sind.

9. Elektromotor nach einem der vorangegangenen Ansprüche,
**dadurch gekennzeichnet, dass**
ein zweites Verschaltungselement (40, 105) vorgesehen ist, welches drei, insbesondere genau drei, Kontaktierungsbereiche (41, 42, 43, 104) aufweist, wobei jeder der drei Kontaktierungsbereiche (41, 42, 43, 104) des zweiten Verschaltungselementes (40, 102) jeweils mit einem der Spulenanschlüsse (5, 6) elektrisch verbunden ist, insbesondere wobei das zweite Verschaltungselement (40, 105) zwei, insbesondere genau zwei, Befestigungsbereiche (45, 46, 105) zur formschlüssigen und/oder stoffschlüssigen Verbindung mit dem Trägerteil (60, 101) aufweist.

10. Elektromotor nach einem der vorangegangenen Ansprüche,
**dadurch gekennzeichnet, dass**
genau drei dritte Verschaltungselemente (50, 103) vorgesehen sind, welche jeweils einen ersten Kontaktierungsbereich (51, 106) und einen zweiten Kontaktierungsbereich (52, 107) aufweisen, welche verschiedenartig ausgeführt sind, wobei jeweils der erste Kontaktierungsbereich (51, 106) eines dritten Verschaltungselementes (50, 103) jeweils mit einem der Spulenanschlüsse (5, 6) elektrisch verbunden ist, wobei jedes der dritten Verschaltungselemente (50) einen ersten und einen zweiten Befestigungsbereich (53, 54) zur formschlüssigen und/oder stoffschlüssigen Verbindung mit dem Trägerteil (60) aufweist, insbesondere wobei die dritten Verschaltungselemente (50, 103) baugleich ausgeführt sind.

11. Elektromotor nach einem der vorangegangenen Ansprüche,
**dadurch gekennzeichnet, dass**
das Trägerteil (60) an seinem äußeren Umfang mehrere Führungsbereiche (66) zur Führung der Spulenanschlüsse (5, 6) in axialer Richtung (A) aufweist, wobei jedem mit einem Spulenanschluss (5, 6) verbundenen Kontaktierungsbereich (31, 32, 41, 42, 43, 51) jeweils ein Führungsbereich (64) zugeordnet ist, insbesondere wobei die Form des Führungsbereichs (66) im Wesentlichen der Form des jeweils zugeordneten Kontaktierungsbereiches (31, 32, 41, 42, 43, 51) gleicht.

12. Elektromotor nach mindestens einem der vorangegangenen Ansprüche,
**dadurch gekennzeichnet, dass**
die Spulenanschlüsse (5, 6) stoffschlüssig mittels Laserschweißen mit den Kontaktierungsbereichen (31, 32) der ersten Verschaltungselemente (30) verbunden sind, wobei die zu verbindenden Kontaktierungsbereiche (31, 32, 41, 42, 43, 51) eine V-förmige Einkerbung (301, 401, 501) zur Aufnahme eines Spulenanschlusses (5, 6) aufweisen insbesondere wobei der Radius des Kreisbogenabschnitts höchstens so groß ist wie der Radius des Wicklungsdrahtes.

13. Verfahren zur Herstellung eines Elektromotors nach einem der vorangegangenen Ansprüche, aufweisend die aufeinanderfolgenden Schritte:
i) Bereitstellen eines, insbesondere im Wesentlichen ringförmigen, Trägerteils (60, 101) aus einem Isoliermaterial, insbesondere wobei das Trägerteil (60, 101) mittels Spritzgussverfahren hergestellt wird,
ii) Anordnen mehrerer baugleicher erster Verschaltungselemente (30, 90) in Umfangsrichtung (U) auf dem Trägerteil (60, 101), wobei die ersten Verschaltungselemente (30, 90) jeweils zwei Kontaktierungsbereiche (31, 32, 91, 92) aufweisen und die ersten Verschaltungselemente (30, 90) derart angeordnet werden, dass der von einem der ersten Verschaltungselemente (30) in Umfangs- (U) und Radialrichtung (R) überdeckte Bereich (B1, B2) jeweils einen von einem benachbarten ersten Verschaltungselement (30, 90) in Umfangs- (U) und Radialrichtung (R) überdeckten Bereich (B1, B2) überlappt, wobei die ersten Verschaltungselemente (30, 90) voneinander beabstandet angeordnet werden,
iii) Verbinden der ersten Verschaltungselemente (30, 90) mit dem Trägerteil (60, 101), insbesondere formschlüssiges und/oder stoffschlüssiges Verbinden, zur Bildung einer Verschaltungseinheit (1, 100),
iv) elektrisches Verbinden, insbesondere mittels Laserschweißen stoffschlüssiges Verbinden, eines jeden der Kontaktierungsbereiche (31, 32, 91, 92) der ersten Verschaltungselemente (30, 90) mit jeweils einem Spulenanschluss (5, 6) einer von mehreren, jeweils zwei Spulenanschlüssen (5, 6) aufweisenden Spulen (4), welche an einem Stator (2) des Elektromotors angeordnet sind, zur Verschaltung der Spulen (4) zu einer mehrphasigen Wicklung,
**dadurch gekennzeichnet, dass**
in Schritt ii) die ersten Verschaltungselemente (30, 90) derart angeordnet werden, dass in Umfangsrichtung (U) mindestens eins der ersten Verschaltungselemente (30, 90) von einem, insbesondere mittels Spritzgussverfahren hergestellten, vorgefertigten Isolierteil (70, 99) aus
einem Isoliermaterial umgeben ist, wobei das umgebene erste Verschaltungselement (30, 90) und das umgebende Isolierteil (70, 99) in Umfangsrichtung (U) beidseitig formschlüssig verbunden sind und/oder in Axialrichtung (A) beidseitig formschlüssig verbunden sind und/oder in Radialrichtung (R) einseitig formschlüssig verbunden sind.

14. Verfahren nach Anspruch 13,
**dadurch gekennzeichnet, dass**
in Schritt ii) ein zweites Verschaltungselement (40, 102) auf dem Trägerteil (60, 101) angeordnet wird, wobei das zweite Verschaltungselement (40, 102) drei, insbesondere genau drei, Kontaktierungsbereiche (41, 42, 43, 104) aufweist,
wobei zur Bildung der Verschaltungseinheit (1, 100) das zweite Verschaltungselement (40, 102) mit dem Trägerteil (60, 101) verbunden wird, insbesondere formschlüssig und/oder stoffschlüssig verbunden wird,
wobei in Schritt iv) jeder der Kontaktierungsbereiche (41, 42, 43, 104) des zweiten Verschaltungselementes mit jeweils einem der Spulenanschlüsse (5, 6) elektrisch verbunden wird.

15. Verfahren nach Anspruch 13 oder 14,
**dadurch gekennzeichnet, dass**
in Schritt ii) genau drei dritte Verschaltungselemente (50, 103) auf dem Trägerteil (60, 101) angeordnet werden, wobei die dritten Verschaltungselemente (50, 103) jeweils zwei verschiedenartige Kontaktierungsbereiche (51, 52, 106, 107) aufweisen,
wobei zur Bildung der Verschaltungseinheit (1, 100) die dritten Verschaltungselemente (50, 103) mit dem Trägerteil (60, 101) elektrisch verbunden werden,
wobei in Schritt iv) jeweils einer der beiden Kontaktierungsbereiche (51, 52, 106, 107) der dritten Verschaltungselemente (50, 103) mit jeweils einem der Spulenanschlüsse (5, 6) elektrisch verbunden wird,
wobei nach Schritt iv) der Stator (2) mit Spulen (4) sowie die mit den Spulenanschlüssen (5, 6) verbundene Verschaltungseinheit (1) mit Vergussmasse vergossen werden, insbesondere derart, dass jeweils die Kontaktierungsbereiche (52) der dritten Verschaltungselemente (50), welche nicht mit einem Spulenanschluss (5, 6) verbunden sind, frei von Vergussmasse verbleiben.

## Claims

1. Electric motor comprising a rotor which is arranged so as to be rotatable about an axis of rotation (D), and comprising a stator (2), the stator (2) having a plurality of coils (4), each coil (4) having two coil terminals (5, 6), the coils being interconnected by means of an interconnection unit (1, 100), the interconnection unit (1, 100) comprising a support part (60, 101) made of an insulating material for bearing a plurality of spaced-apart interconnection elements (30, 40, 50, 90, 102, 103), at least three first interconnection elements (30, 90) being provided, each of the first interconnection elements (30, 90) in each case having two spaced-apart contact regions (31, 32, 91, 92) and one connection region (33, 94) that is connected to the contact regions (31, 32, 91, 92), the contact regions (31, 32, 91, 92) of each first interconnection element (30, 90) each being electrically connected to one of the coil terminals (5, 6) at one connection point (20) each, a region (B1, B2) that is covered by the connection region (33, 94) of one of the first interconnection elements (30, 90) in the circumferential direction (U) and the radial direction (R) overlapping in each case with a region (B1, B2) that is covered by the connection region (33, 94) of another of the first interconnection elements (30, 90) in the circumferential direction (U) and the radial direction (R), the first interconnection elements (30, 90) being configured to be structurally identical,
**characterised in that**
at least one of the first interconnection elements (30, 90) is enclosed by a prefabricated insulating part (70, 99) made of insulating material in such a way that the enclosed first interconnection element (30, 90) and the enclosing insulating part (70, 99) are interlockingly connected on both sides in the circumferential direction (U) and/or are interlockingly connected on both sides in the axial direction (A) and/or are interlockingly connected on one side in the radial direction (R).

2. Electric motor according to claim 1,
**characterised in that**
the insulating part (70, 99) is manufactured by means of an injection moulding method.

3. Electric motor according to claim 1 or claim 2,
**characterised in that**
in the circumferential direction (U), only every other first interconnection element (30, 90) is enclosed thus by a particular insulating part (70, 99).

4. Electric motor according to any of the preceding claims,
**characterised in that**
the connection region (33, 94) of each of the first interconnection elements (30, 90) has an in particular approximately rectangular cross section, the extent thereof in the axial direction being less than the extent thereof in the radial direction.

5. Electric motor according to any of the preceding claims,
**characterised in that**
all the connection regions (33, 94) of the first interconnection elements (30, 90) each have two axial steps (38, 39, 95, 96).

6. Electric motor according to any of claims 1 to 4,
**characterised in that**
all the connection regions (33, 94) of the first interconnection elements (30, 90) each have a slope running, in particular constantly, in the axial direction.

7. Electric motor according to any of the preceding claims,
**characterised in that**
the two contact regions of each first interconnection element (30, 90) each have different axial positions.

8. Electric motor according to any of the preceding claims,
**characterised in that**
each of the first interconnection elements (30, 90) each has a first fastening region (34, 97) for being connected to the support part (60, 101) in an interlocking and/or integrally bonded manner, each of the first interconnection elements (30) each having a second fastening region (35) for being connected to the support part (60) in an interlocking and/or integrally bonded manner, the first fastening regions (34, 97) of each of the first interconnection elements (30, 90) each having the same first axial position, and the second fastening regions (35) of each of the first interconnection elements (30) each having the same second axial position, the first axial position and the second axial position being different.

9. Electric motor according to any of the preceding claims,
**characterised in that**
a second interconnection element (40, 105) is provided and has three, in particular exactly three, contact regions (41, 42, 43, 104), each of the three contact regions (41, 42, 43, 104) of the second interconnection element (40, 102) each being electrically connected to one of the coil terminals (5, 6), the second interconnection element (40, 105) in particular having two, in particular exactly two, fastening regions (45, 46, 105) for being connected to the support part (60, 101) in an interlocking and/or integrally bonded manner.

10. Electric motor according to any of the preceding claims,
**characterised in that**
exactly three third interconnection elements (50, 103) are provided and each have a first contact region (51, 106) and a second contact region (52, 107), which are configured differently, the first contact region (51, 106) of each third interconnection element (50, 103) being electrically connected to one of the coil terminals (5, 6), each of the third interconnection elements (50) having a first and a second fastening region (53, 54) for being connected to the support part (60) in an interlocking and/or integrally bonded manner, the third interconnection elements (50, 103) in particular being configured to be structurally identical.

11. Electric motor according to any of the preceding claims,
**characterised in that**
the support part (60) has, on its outer circumference, a plurality of guide regions (66) for guiding the coil terminals (5, 6) in the axial direction (A), a guide region (64) being assigned in each case to each contact region (31, 32, 41, 42, 43, 51) connected to a coil terminal (5, 6), the shape of the guide region (66) in particular being substantially the same shape as the relevant assigned contact region (31, 32, 41, 42, 43, 51).

12. Electric motor according to at least one of the preceding claims,
**characterised in that**
the coil terminals (5, 6) are integrally bonded to the contact regions (31, 32) of the first interconnection elements (30) by means of laser welding, the contact regions (31, 32, 41, 42, 43, 51) that are to be connected having a V-shaped notch (301, 401, 501) for bearing a coil terminal (5, 6), the radius of the circular arc portion being at most the same size as the radius of the winding wire.

13. Method for producing an electric motor according to any of the preceding claims, comprising the following successive steps:
i) providing a support part (60, 101) which is in particular substantially annular and is made of an insulating material, the support part (60, 101) in particular being manufactured by means of an injection moulding method,
ii) arranging a plurality of structurally identical first interconnection elements (30, 90) in the circumferential direction (U) on the support part (60, 101), the first interconnection elements (30, 90) each having two contact regions (31, 32, 91, 92) and the first interconnection elements (30, 90) being arranged such that the region (B1, B2) covered by one of the first interconnection elements (30) in the circumferential direction (U) and the radial direction (R) in each case overlaps with a region (B1, B2) covered by an adjacent first interconnection element (30, 90) in the circumferential direction (U) and the radial direction (R), the first interconnection elements (30, 90) being arranged at a distance from one another,
iii) connecting the first interconnection elements (30, 90) to the support part (60, 101), in particular in an interlocking and/or integrally bonded manner, to form an interconnection unit (1, 100),
iv) electrically connecting, in particular integrally bonding by means of laser welding, each contact region (31, 32, 91, 92) of the first interconnection elements (30, 90) in each case to one coil terminal (5, 6) of one of a plurality of coils (4), which each have two coil terminals (5, 6) and are arranged on a stator (2) of the electric motor, in order to interconnect the coils (4) to form a multi-phase winding,
**characterised in that**
the first interconnection elements (30, 90) are arranged in step ii) such that at least one of the first interconnection elements (30, 90) is enclosed in the circumferential direction (U) by a prefabricated insulating part (70, 99) which is made of an insulating material and in particular manufactured by means of an injection moulding method, the enclosed first interconnection element (30, 90) and the enclosing insulating part (70, 99) being interlockingly connected on both sides in the circumferential direction (U) and/or being interlockingly connected on both sides in the axial direction (A) and/or being interlockingly connected on one side in the radial direction (R).

14. Method according to claim 13,
**characterised in that**
in step ii), a second interconnection element (40, 102) is arranged on the support part (60, 101), the second interconnection element (40, 102) having three, in particular exactly three, contact regions (41, 42, 43, 104),
the second interconnection element (40, 102) being connected to the support part (60, 101), in particular in an interlocking and/or integrally bonded manner, in order to form the interconnection unit (1, 100),
each of the contact regions (41, 42, 43, 104) of the second interconnection element each being electrically connected to one of the coil terminals (5, 6) in step iv).

15. Method according to claim 13 or claim 14,
**characterised in that**
in step ii), exactly three third interconnection elements (50, 103) are arranged on the support part (60, 101), the third interconnection elements (50, 103) each having two different contact regions (51, 52, 106, 107),
the third interconnection elements (50, 103) being electrically connected to the support part (60, 101) in order to form the interconnection unit (1, 100),
one of the two contact regions (51, 52, 106, 107) of the third interconnection elements (50, 103) each being electrically connected to one of the coil terminals (5, 6) in step iv),
the stator (2), which comprises coils (4), and the interconnection unit (1) connected to the coil terminals (5, 6) being encapsulated with casting compound after step iv), in particular in such a way that those contact regions (52) of each third interconnection element (50) which are not connected to a coil terminal (5, 6) remain free of casting compound.

## Revendications

1. Moteur électrique avec un rotor agencé de manière à pouvoir tourner autour d'un axe de rotation (D) et avec un stator (2), le stator (2) présentant plusieurs bobines (4), chaque bobine (4) présentant deux bornes de bobine (5, 6), les bobines étant connectées les unes aux autres au moyen d'une unité d'interconnexion (1, 100), l'unité d'interconnexion (1, 100) comprenant une partie support (60, 101) constituée d'un matériau isolant et permettant d'accueillir plusieurs éléments d'interconnexion (30, 40, 50, 90, 102, 103) espacés les uns des autres, au moins trois premiers éléments d'interconnexion (30, 90) étant prévus, chacun des premiers éléments d'interconnexion (30, 90) présentant respectivement deux régions de contact (31, 32, 91, 92) espacées l'une de l'autre et une région de connexion (33, 94) reliée aux régions de contact (31, 32, 91, 92), les régions de contact (31, 32, 91, 92) de chaque premier élément d'interconnexion (30, 90) étant respectivement reliées électriquement à l'une des bornes de bobine (5, 6) au niveau de respectivement un point de connexion (20), une région (B1, B2) recouverte par la région de connexion (33, 94) de l'un des premiers éléments d'interconnexion (30, 90) dans la direction périphérique (U) et la direction radiale (R) chevauchant respectivement une région (B1, B2) recouverte par la région de connexion (33, 94) d'un autre des premiers éléments d'interconnexion (30, 90) dans la direction périphérique (U) et la direction radiale (R), les premiers éléments d'interconnexion (30, 90) étant de construction identique,
**caractérisé en ce que**
au moins un des premiers éléments d'interconnexion (30, 90) est entouré par une partie isolante (70, 99) préfabriquée en matériau isolant de telle manière que le premier élément d'interconnexion (30, 90) entourée et la partie isolante (70, 99) entourante sont reliés avec verrouillage par complémentarité de forme des deux côtés dans la direction périphérique (U) et/ou sont reliés avec verrouillage par complémentarité de forme des deux côtés dans la direction axiale (A) et/ou sont reliés avec verrouillage par complémentarité de forme d'un côté dans la direction radiale (R).

2. Moteur électrique selon la revendication 1,
**caractérisé en ce que** la partie isolante (70, 99) est fabriquée grâce à un procédé de moulage par injection.

3. Moteur électrique selon la revendication 1 ou 2,
**caractérisé en ce que**
dans la direction périphérique (U), seul chaque deuxième élément parmi les premiers éléments d'interconnexion (30, 90) est entouré de ladite manière par une partie isolante (70, 99) respective.

4. Moteur électrique selon l'une quelconque des revendications précédentes,
**caractérisé en ce que**
la région de connexion (33, 94) de chacun des premiers éléments d'interconnexion (30, 90) présente une section transversale, en particulier approximativement rectangulaire, dont l'extension dans la direction axiale est inférieure à son extension dans la direction radiale.

5. Moteur électrique selon l'une quelconque des revendications précédentes,
**caractérisé en ce que**
toutes les régions de connexion (33, 94) des premiers éléments d'interconnexion (30, 90) présentent respectivement deux étagements axiaux (38, 39, 95, 96).

6. Moteur électrique selon l'une quelconque des revendications 1 à 4,
**caractérisé en ce que**
toutes les régions de connexion (33, 94) des premiers éléments d'interconnexion (30, 90) présentent respectivement une inclinaison, en particulier constante, dans la direction axiale.

7. Moteur électrique selon l'une quelconque des revendications précédentes,
**caractérisé en ce que**
les deux régions de contact de chaque premier élément d'interconnexion (30, 90) présentent des positions axiales respectivement différentes.

8. Moteur électrique selon l'une quelconque des revendications précédentes,
**caractérisé en ce que**
chacun des premiers éléments d'interconnexion (30, 90) présente respectivement une première région de fixation (34, 97) permettant une liaison avec verrouillage par complémentarité de forme et/ou de matière avec la partie support (60, 101), chacun des premiers éléments d'interconnexion (30) présentant respectivement une deuxième région de fixation (35) permettant une liaison avec verrouillage par complémentarité de forme et/ou de matière avec la partie support (60), les premières régions de fixation (34, 97) de chacun des premiers éléments d'interconnexion (30, 90) présentant respectivement la même première position axiale et les deuxièmes régions de fixation (35) de chacun des premiers éléments d'interconnexion (30) présentant respectivement la même deuxième position axiale, la première position axiale et la deuxième position axiale étant différentes.

9. Moteur électrique selon l'une quelconque des revendications précédentes,
**caractérisé en ce que**
un deuxième élément d'interconnexion (40, 105) est prévu, qui présente trois, en particulier exactement trois, régions de contact (41, 42, 43, 104), chacune des trois régions de contact (41, 42, 43, 104) du deuxième élément d'interconnexion (40, 102) étant reliée électriquement respectivement à une des bornes de bobine (5, 6), en particulier le deuxième élément d'interconnexion (40, 105) présentant deux, en particulier exactement deux, régions de fixation (45, 46, 105) permettant une liaison avec verrouillage par complémentarité de forme et/ou de matière avec la partie support (60, 101).

10. Moteur électrique selon l'une quelconque des revendications précédentes,
**caractérisé en ce que**
exactement trois troisièmes éléments d'interconnexion (50, 103) sont prévus, qui présentent respectivement une première région de contact (51, 106) et une deuxième région de contact (52, 107) qui sont conçues de différentes manières, la première région de contact (51, 106) d'un troisième élément d'interconnexion (50, 103) étant respectivement reliée électriquement à respectivement une des bornes de bobine (5, 6), chacun des troisièmes éléments d'interconnexion (50) présentant des première et deuxième régions de fixation (53, 54) permettant une liaison avec verrouillage par complémentarité de forme et/ou de matière avec la partie support (60), les troisièmes éléments d'interconnexion (50, 103) étant en particulier de construction identique.

11. Moteur électrique selon l'une quelconque des revendications précédentes,
**caractérisé en ce que**
la partie support (60) présente au niveau de sa périphérie extérieure plusieurs régions de guidage (66) permettant de guider les bornes de bobine (5, 6) dans la direction axiale (A), chaque région de contact (31, 32, 41, 42, 43, 51) reliée à une borne de bobine (5, 6) étant associée à respectivement une région de guidage (64), la forme de la région de guidage (66) étant en particulier essentiellement identique à la forme de la région de contact (31, 32, 41, 42, 43, 51) associée.

12. Moteur électrique selon au moins l'une quelconque des revendications précédentes,
**caractérisé en ce que**
les bornes de bobine (5, 6) sont reliées par soudage au laser aux régions de contact (31, 32) des premiers éléments d'interconnexion (30) avec verrouillage par complémentarité de matière, les régions de contact (31, 32, 41, 42, 43, 51) à relier présentant une encoche en forme de V (301, 401, 501) permettant d'accueillir une borne de bobine (5, 6), le rayon de la section d'arc de cercle étant en particulier au plus aussi grand que le rayon du fil d'enroulement.

13. Procédé de fabrication d'un moteur électrique selon l'une quelconque des revendications précédentes, comprenant les étapes successives ci-dessous consistant à :
i) fournir une partie support (60, 101), en particulier essentiellement annulaire, en un matériau isolant, la partie support (60, 101) étant en particulier fabriquée grâce à un procédé de moulage par injection,
ii) agencer plusieurs premiers éléments d'interconnexion (30, 90) de construction identique sur la partie support (60, 101) dans la direction périphérique (U), les premiers éléments d'interconnexion (30, 90) présentant respectivement deux régions de contact (31, 32, 91, 92) et les premiers éléments d'interconnexion (30, 90) étant agencés de telle manière que la région (B1, B2) recouverte par un des premiers éléments d'interconnexion (30) dans la direction périphérique (U) et la direction radiale (R) chevauche respectivement une région (B1, B2) recouverte par un premier élément d'interconnexion (30, 90) voisin dans la direction périphérique (U) et la direction radiale (R), les premiers éléments d'interconnexion (30, 90) étant agencés à distance les uns des autres,
iii) relier, en particulier relier avec verrouillage par complémentarité de forme et/ou de matière, les premiers éléments d'interconnexion (30, 90) à la partie support (60, 101) afin de former une unité d'interconnexion (1, 100),
iv) relier électriquement, en particulier relier par soudage au laser avec verrouillage par complémentarité de matière, chacune des régions de contact (31, 32, 91, 92) des premiers éléments d'interconnexion (30, 90) avec respectivement une borne de bobine (5, 6) de l'une des plusieurs bobines (4) présentant respectivement deux bornes de bobine (5, 6) et agencées au niveau d'un stator (2) du moteur électrique, afin de connecter les bobines (4) à un enroulement polyphasé,
**caractérisé en ce que**
à l'étape ii), les premiers éléments d'interconnexion (30, 90) sont agencés de telle manière qu'au moins un des premiers éléments d'interconnexion (30, 90) est entouré dans la direction périphérique (U) par une partie isolante (70, 99) préfabriquée en un matériau isolant, en particulier fabriquée grâce à un procédé de moulage par injection, le premier élément d'interconnexion (30, 90) entouré et la partie isolante (70, 99) entourante étant reliés avec verrouillage par complémentarité de forme des deux côtés dans la direction périphérique (U) et/ou étant reliés avec verrouillage par complémentarité de forme des deux côtés dans la direction axiale (A) et/ou étant reliés avec verrouillage par complémentarité de forme d'un côté dans la direction radiale (R).

14. Procédé selon la revendication 13,
**caractérisé en ce que**
à l'étape ii), un deuxième élément d'interconnexion (40, 102) est agencé sur la partie support (60, 101), le deuxième élément d'interconnexion (40, 102) présentant trois, en particulier exactement trois, régions de contact (41, 42, 43, 104),
le deuxième élément d'interconnexion (40, 102) étant relié, en particulier étant relié avec verrouillage par complémentarité de forme et/ou de matière, à la partie support (60, 101) afin de former l'unité d'interconnexion (1, 100),
à l'étape iv), chacune des régions de contact (41, 42, 43, 104) du deuxième élément d'interconnexion étant reliée électriquement à respectivement une des bornes de bobine (5, 6).

15. Procédé selon la revendication 13 ou 14,
**caractérisé en ce que**
à l'étape ii), exactement trois troisièmes éléments d'interconnexion (50, 103) sont agencés sur la partie support (60, 101), les troisièmes éléments d'interconnexion (50, 103) présentant respectivement deux régions de contact (51, 52, 106, 107) d'un type différent,
les troisièmes éléments d'interconnexion (50, 103) étant reliés électriquement à la partie support (60, 101) afin de former l'unité d'interconnexion (1, 100),
à l'étape iv), respectivement une des deux régions de contact (51, 52, 106, 107) des troisièmes éléments d'interconnexion (50, 103) étant reliée électriquement à respectivement une des bornes de bobine (5, 6),
après l'étape iv), le stator (2) avec les bobines (4), ainsi que l'unité d'interconnexion (1) reliée aux bornes de bobine (5, 6), étant coulés avec une masse de coulée, en particulier de telle manière que les régions de contact (52) des troisièmes éléments d'interconnexion (50) qui ne sont pas reliés à une borne de bobine (5, 6) restent exemptes de masse de coulée.
